# FASCICULE DE BREVET EUROPEEN

(11) **EP 0 972 142 B1**
(45) Date de publication et mention de la délivrance du brevet: **09.04.2003**
(21) Numéro de dépôt: 99902609.9
(22) Date de dépôt: 05.02.1999
(51) Int. Cl.: F16D 13/75

(54) **MECANISME D'EMBRAYAGE A FRICTION, NOTAMMENT POUR VEHICULE AUTOMOBILE, COMPORTANT UN DISPOSITIF DE RATTRAPAGE D'USURE**
REIBUNGSKUPPLUNGSMECHANISMUS MIT EINER NACHSTELLVORRICHTUNG, INSBESONDERE FÜR KRAFTFAHRZEUGE
FRICTION CLUTCH MECHANISM, IN PARTICULAR FOR MOTOR VEHICLE, COMPRISING A WEAR TAKE-UP DEVICE

(30) Priorité: 05.02.1998 FR 9801453; 02.12.1998 FR 9815261
(43) Date de publication de la demande: 19.01.2000
(73) Titulaire: VALEO EMBRAYAGES s.a.s., 80009 Amiens Cedex 1 (FR)
(72) Inventeur: GRATON, Michel, F-75020 Paris (FR); BLARD, Michel, F-92130 Issy les Moulineaux (FR); DALBIEZ, André, F-95100 Argenteuil (FR)
(74) Mandataire: Gamonal, Didier
(86) Numéro de dépôt international: FR9900261
(87) Numéro de publication internationale: WO99040335

(56) Documents cités:
- FR-A- 2 345 620
- FR-A- 2 753 503
- US-A- 5 090 536
- PATENT ABSTRACTS OF JAPAN vol. 097, no. 005, 30 mai 1997 & JP 09 024855 A (NIPPON SEIKO KK), 28 janvier 1997

## Description

La présente invention concerne un embrayage à friction, notamment pour véhicule automobile, et se rapporte plus particulièrement à un embrayage équipé d'un dispositif de compensation de l'usure due notamment à l'usure d'au moins une garniture de friction, ledit dispositif, dit ci-après dispositif de rattrapage d'usure, opérant au fur et à mesure de l'usure de ou desdites garnitures.

Elle se rapporte aux mécanismes d'embrayage à friction que comporte un tel embrayage.

Un embrayage à friction classique comporte généralement un plateau de réaction appartenant à un volant moteur, éventuellement en deux parties pour formation d'un volant amortisseur ou d'un volant flexible, calé en rotation sur un premier arbre, usuellement un arbre menant tel que le vilebrequin du moteur à combustion interne, et supportant par sa périphérie externe un couvercle auquel est attaché, avec mobilité axiale, au moins un plateau de pression.

Le plateau de pression est solidaire en rotation du couvercle et du plateau de réaction tout en pouvant se déplacer axialement sous la sollicitation de moyens embrayeurs à action axiale commandés par des moyens débrayeurs. Les moyens débrayeurs peuvent consister en des ressorts hélicoïdaux, ou en deux rondelles Belleville montées en série, soumis à l'action de leviers de débrayage formant les moyens débrayeurs.

Généralement, les moyens embrayeurs et débrayeurs appartiennent à une même pièce, par exemple un diaphragme métallique prenant appui sur le couvercle ; le diaphragme peut être monté en série ou en parallèle avec une rondelle Belleville pour assurer une assistance de l'effort de débrayage.

Un disque de friction, portant des garnitures de friction à sa périphérie externe, solidaire en rotation d'un arbre, usuellement un arbre mené tel que l'arbre d'entrée de la boîte de vitesses, est intercalé entre le plateau de pression et le plateau de réaction de façon à être serré entre eux lorsque l'embrayage est en position d'engagement pour transmettre le couple de l'arbre menant à l'arbre mené.

Classiquement les garnitures de friction sont montées sur un support axialement élastique accouplé de manière rigide ou élastique à un moyeu calé en rotation sur l'arbre mené. Grâce
à cette disposition le disque de friction assiste le diaphragme lors de l'opération de débrayage de l'embrayage. En variante, le support est rigide en étant par exemple noyé à sa périphérie externe dans une unique garniture de friction.

Classiquement les moyens embrayeurs, le couvercle et le plateau de pression appartiennent à un ensemble unitaire dit mécanisme d'embrayage à friction.

Les moyens embrayeurs commandent le déplacement axial du plateau de pression lorsqu'ils sont actionnés par une butée de débrayage par l'intermédiaire des moyens débrayeurs.

La butée de débrayage peut être commandée mécaniquement, hydrauliquement ou électriquement. La commande peut être du type manuel, automatique ou semi-automatique.

Au cours de la durée de vie d'un tel embrayage, la ou les garnitures de friction ainsi que les contre-matériaux, plateaux de pression et de réaction s'usent, ce qui provoque une variation de la position du plateau de pression et celle des moyens embrayeurs à action axiale et de la butée de débrayage, d'où il s'en suit une variation de la force de serrage entre le disque de friction, d'une part, et les plateaux de pression et de réaction, d'autre part, en raison des modifications des conditions de travail des moyens embrayeurs, et la force nécessaire pour débrayer s'en trouve affectée. En dotant un tel embrayage d'un dispositif de rattrapage d'usure, on évite ces inconvénients, les moyens embrayeurs, ainsi que la butée de débrayage, usuellement en appui constant sur les moyens débrayeurs, occupant la même position lorsque l'embrayage est en position d'engagement en sorte que l'encombrement axial de l'embrayage est réduit.

On a déjà proposé, selon le document US-A-5 090 536, de réaliser un dispositif de rattrapage en disposant entre le diaphragme et le plateau de pression deux bagues annulaires portant des rampes complémentaires, une première bague annulaire étant fixe en rotation par rapport au plateau de pression, la seconde étant déplaçable en rotation, par rapport à celui-ci et à la première, le déplacement relatif circonférentiel des deux bagues conduisant, du fait des rampes complémentaires qu'elles portent, à un écartement des bagues dans le sens axial compensant ladite usure, cet écartement simulant une augmentation de l'épaisseur axiale du plateau de pression ; pour son déplacement relatif en rotation, la seconde bague est munie à sa périphérie d'un secteur denté dont les dents engrènent avec une vis sans fin disposée de manière tangentielle et montée à rotation sur un axe porté par le couvercle de l'embrayage ; la vis sans fin est susceptible d'être entraînée en rotation, par l'intermédiaire d'un accouplement unidirectionnel, par un tambour porté par le même axe qui porte la vis sans fin, lequel tambour est, en cas d'usure des garnitures du disque de friction, entraîné lui-même en rotation ; l'accouplement unidirectionnel est disposé en sorte que la vis sans fin est entraînée par le tambour, qui constitue en quelque sorte une pièce d'armement du dispositif, lorsque celui-ci est lui-même entraîné en rotation lors du débrayage, la rotation de la vis sans fin conduisant à une rotation de la seconde bague, comme cela a été dit ci-dessus.

Un accouplement unidirectionnel disposé entre la vis sans fin et l'axe qui la supporte permet à celle-ci de conserver sa position en rotation après chaque réglage.

Un tel dispositif, selon le document US-A-5 090 536, présente les inconvénients suivants : la pièce d'armement, qui est portée par le couvercle de l'embrayage, est susceptible d'être entraînée en rotation par un levier lui-même commandé par la butée de débrayage ; dès lors, la butée de débrayage doit être spécifiquement adaptée à la commande dudit levier et est encombrante axialement ; par ailleurs, lorsque la butée de débrayage est amenée à être déplacée axialement au delà de la course juste nécessaire pour l'opération de débrayage, l'opération de rattrapage est effectuée alors qu'il n'y a pas eu usure, ce qui est dangereux car pouvant conduire à un blocage de l'embrayage qui finit par ne plus pouvoir être débrayé.

Dans le document FR 96 11297, non compris dans l'état de la technique, déposé le 17 septembre 1996 et publié après la priorité de la demande FR 98/01453 sous le numéro 2 753 503 ou EP 0 898 662, le dispositif de rattrapage d'usure comporte dans les figures 21 à 26 une cassette comprenant de manière unitaire un support en forme de U avec une âme et deux ailes latérales dotées chacune d'un trou pour support d'au moins un axe portant une vis sans fin, une roue à rochet et un ressort hélicoïdal. Le support porte en outre un organe élastique doté, d'une part, d'une languette de commande et, d'autre part, d'un cliquet anti-retour.

La languette de commande est propre à être manoeuvrée par un actionneur appartenant aux moyens embrayeurs de l'embrayage et coopère, ainsi que le cliquet, avec les dents de la roue à rochet.

La vis sans fin coopère avec les dents d'une denture solidaire en rotation des moyens à rampes placés entre les moyens d'appui des moyens embrayeurs et le plateau de pression. La vis sans fin coopère avec la denture et avec des moyens d'entraînement en rotation, comprenant le ressort hélicoïdal formant ressort de rattrapage, qui sont rendus opérationnels par l'usure des garnitures de friction lorsque l'embrayage est engagé. La vis sans fin est montée tangentiellement par rapport à sa denture associée.

Il est souhaitable d'améliorer la coopération de la vis avec la denture.

La présente invention a pour objet de répondre de manière simple et économique à ce souhait et aux inconvénients de l'art antérieur.

Dans ce but un mécanisme d'embrayage du type sus-indiqué comporte selon l'invention des trous des ailes qui sont décalés axialement l'un par rapport à l'autre pour inclinaison de la vis sans fin et de l'axe de manière à ce que le filet de la vis sans fin soit globalement parallèle aux flancs des dents de la denture externe.

Ainsi on peut incliner l'axe et donc la vis sans fin.

De préférence l'axe est incliné d'un angle égal à celui du filet de la vis sans fin. L'inclinaison dépend de l'angle de la vis sans fin.

Plus précisément le profil de la vis, notamment le filet de celle-ci, se déplace globalement parallèlement aux flancs des dents de la denture. La face du filet est donc globalement parallèle au flanc en regard de la dent.

Grâce à l'invention on élimine les risques de coincement entre la vis et la denture solidaire en rotation des moyens à rampes.

En outre on obtient une bonne zone de contact entre la vis et la denture, dont les dents sont ainsi droites.

Le rendement du dispositif de rattrapage d'usure est élevé.

Certes on aurait pu incliner directement la cassette mais cela aurait augmenté l'encombrement de celle-ci et donc augmente la taille du logement réalisé dans le couvercle pour le montage de la cassette.

Grâce à l'invention l'encombrement de la cassette reste globalement le même. De plus on ne modifie pas profondément le support.

La solution est donc simple et économique.

Dans une première forme de réalisation les ailes sont vrillées pour présenter des zones inclinées perpendiculaires à l'axe.

Le vrillage est simple à réaliser et est économique. En outre on n'augmente pas le nombre de pièces.

Dans une autre forme de réalisation les ailes ne sont pas vrillées en sorte que le support n'est pas modifié.

L'inclinaison est réalisée à l'aide de paliers dont le trou central est incliné. Les paliers sont montés dans les trous des ailes.

Les trous sont avantageusement borgnes au départ puis refermés ensuite partiellement par sertissage de languettes au contact des paliers pour un montage automatique et/ou formation d'une pièce unique, axe - vis - roue à rochet. En variante, les trous sont refermés par des pièces supplémentaires fixées sur les ailes du support, ou par collage ou par soudage des paliers sur les bords des trous borgnes.

On incline, en fonction de l'inclinaison recherchée de la vis sans fin, aussi les dents de la roue à rochet coopérant avec une extrémité de la languette de commande et un cliquet anti-retour que comporte l'organe élastique.

Grâce à cette disposition l'extrémité libre de la languette de commande s'étend parallèlement aux dents de la roue à rochet et on vrille le cliquet anti-retour, du fait de son décalage par rapport à la languette de commande, pour que son extrémité libre soit parallèle aux dents.

Ainsi, malgré l'inclinaison de l'axe, on a une bonne transmission d'efforts entre les moyens embrayeurs et la roue à rochet, et le cliquet anti-retour a une grande zone de contact avec les dents de la roue à rochet.

Grâce à l'invention, malgré l'inclinaison de l'axe, on travaille à faces parallèles, le filet de la vis étant globalement parallèle aux flancs des dents de la denture, tandis que les extrémités libres du cliquet et de la languette de commande sont parallèles aux dents de la roue à rochet. Les trous des ailes n'ont pas forcément la même taille.

Par exemple l'axe peut présenter une portion de diamètre réduit traversant un trou de taille réduite pratiqué dans l'une des ailes et immobilisé axialement à l'aide d'une rondelle élastique.

Un prolongement cylindrique de la vis sans fin traverse alors l'autre trou de plus grande taille de l'autre aile.

L'organe élastique présente un retour portant centralement la languette de commande.

Suivant une caractéristique le retour présente de part et d'autre de la languette un premier et un second tronçons de hauteur différente.

Ce retour a une forme non symétrique, le premier tronçon étant en regard de la vis et a une hauteur inférieure à celle du second tronçon implanté en regard du ressort hélicoïdal.

Le retour est ainsi mécaniquement résistant.

Cette résistance est accrue par le fait que la languette de commande est dotée d'un embouti de renforcement de forme oblongue. L'embouti est également dans la ligne de transmission de forces entre les moyens embrayeurs et la roue à rochet, ce qui est favorable pour l'entraînement de la roue à rochet.

Cette roue présente des dents inclinées en fonction du filet de la vis sans fin.

La languette de commande et le cliquet anti-retour, dont les extrémités libres sont inclinées, travaillent dans de très bonnes conditions.

Ainsi en cas d'usure des garnitures, on peut armer dans de bonnes conditions le ressort hélicoïdal puis, par la suite, ce ressort, lors de l'opération de débrayage, peut entraîner dans de très bonnes conditions les moyens à rampes.

Bien entendu, le support peut être d'un seul tenant avec le couvercle et être réalisé à la faveur d'une déformation en forme de U réalisée à la périphérie externe du couvercle pour former un logement pour l'organe élastique et la vis sans fin montée sur son axe.

En variante le support est constitué par l'organe élastique.

Bien entendu la cassette peut être dépourvue de ressort de rattrapage. Ce ressort peut être implanté entre les rampes et les contre-rampes du dispositif de rattrapage d'usure, comme, décrit par exemple dans le document FR-A-2 606 477.

Les moyens à rampes peuvent être d'un seul tenant avec la denture. En variantes, la denture appartient à une pièce intermédiaire liée en rotation avec les rampes pouvant se déplacer axialement par rapport à la pièce intermédiaire globalement axialement fixe par rapport au couvercle. Par exemple la pièce intermédiaire est pincée entre des prolongements issus d'un jeu de premières languettes liant en rotation le plateau de pression au couvercle.

En variante, la pièce intermédiaire est reliée aux rampes par des secondes languettes, du type de celles des premières languettes, autorisant un déplacement axial des rampes par rapport à la pièce intermédiaire. Pour plus de précisions, on se reportera au document FR 2 783 580 déposé le 23.09.1998, qui ne fait pas partie de l'état de la technique car publié après la priorité de la demande FR 98/01453. Il en résulte que l'organe élastique peut être dépourvu de cliquet anti-retour.

Le dispositif de rattrapage d'usure a, grâce à toutes ces dispositions, un rendement élevé et une grande durée de vie.

Pour mieux faire comprendre l'objet de l'invention, on va décrire maintenant, à titre d'exemple purement illustratif et non limitatif, un mode de réalisation représenté sur les dessins annexés dans lesquels :
- la figure 1 est une vue de face d'un embrayage équipé d'un dispositif de rattrapage d'usure selon l'invention, avec des arrachements locaux pour montrer la denture des moyens de rampes et les languettes tangentielles ;
- la figure 2 est une vue en coupe selon la ligne A-A- de la figure 1 ;
- la figure 3 est une vue en coupe selon la ligne B-B de la figure 1 ;
- les figures 4,5,6 sont des vues à plus grande échelle suivant respectivement les flèches C, D, E de la figure 1 ;
- la figure 7 est une vue à plus grande échelle de l'encart T de la figure 2 ;
- la figure 8 est une vue en perspective de la cassette de rattrapage d'usure ;
- la figure 9 est une vue en perspective selon la flèche 9 de la figure 8 ;
- la figure 10 est une vue selon la flèche 10 de la figure 8 ;
- la figure 11 est une vue en coupe selon la ligne 11-11 de la figure 10 ;
- la figure 12 est une vue en coupe selon la ligne 12-12 de la figure 11 ;
- la figure 13 est une vue du support de la cassette selon la flèche 10 de la figure 8 ;
- la figure 14 est une vue de l'ensemble vis sans fin - roue à rochet ;
- la figure 15 est une vue en perspective de l'organe élastique porté par le support ;
- la figure 16 est une vue selon la flèche 16 de la figure 15 ;
- la figure 17 est une vue en perspective des moyens à rampes du dispositif de rattrapage d'usure ;
- les figures 18 et 19 sont des vues analogues aux figures 10 et 12 pour un deuxième mode de réalisation de la cassette à axe incliné ;
- les figures 20 et 21 sont des vues analogues aux figures 10 et 12 pour un troisième mode de réalisation de la cassette à axe incliné ;
- la figure 22 est une vue partielle montrant, dans le cadre du troisième mode de réalisation, le trou d'une aile du support de la cassette recevant son palier avant la fixation de celui-ci ;
- la figure 23 est une vue analogue à la figure 2 pour un quatrième exemple de réalisation ;
- la figure 24 est une vue analogue à la figure 13 pour ce quatrième exemple de réalisation ;
- la figure 25 est une vue en coupe selon la ligne 25-25 de la figure 24 ;
- la figure 26 est une vue du support selon la flèche 26 de la figure 23 ;
- la figure 27 est une vue partielle avec arrachement local selon la flèche 26 de la figure 23 ;
- les figures 28 à 30 sont des vues analogues respectivement aux figures 9,10 et 7 pour un cinquième exemple de réalisation ;
- la figure 31 est une vue selon la flèche 31 de la figure 28 ;
- les figures 32 et 33 sont des vues analogues aux figures 6 et 9 pour un sixième exemple de réalisation, une partie des moyens de rampes étant représentée à la figure 32.
- La figure 34 est une vue analogue à la figure 6 pour un septième exemple de réalisation ;
- La figure 35 est une vue de l'organe élastique seul de la figure 34 ;
- La figure 36 est une vue analogue à la figure 32 pour un huitième exemple de réalisation ;
- La figure 37 est une vue en perspective de l'organe élastique de la figure 36 ;
- La figure 38 est une vue analogue à la figure 7, pour un neuvième exemple de réalisation ;
- La figure 39 est une vue analogue à la figure 38 pour un dixième exemple de réalisation.

Dans les figures les éléments communs seront affects des mêmes signes de référence.

Les figures représentent un embrayage équipé d'un dispositif de rattrapage d'usure, du genre de celui décrit dans la demande de brevet français déposée le 17 septembre 1996 sous le numéro 96 11297 (FR-A-2 753 503) à laquelle il conviendra de se reporter pour plus de détails.

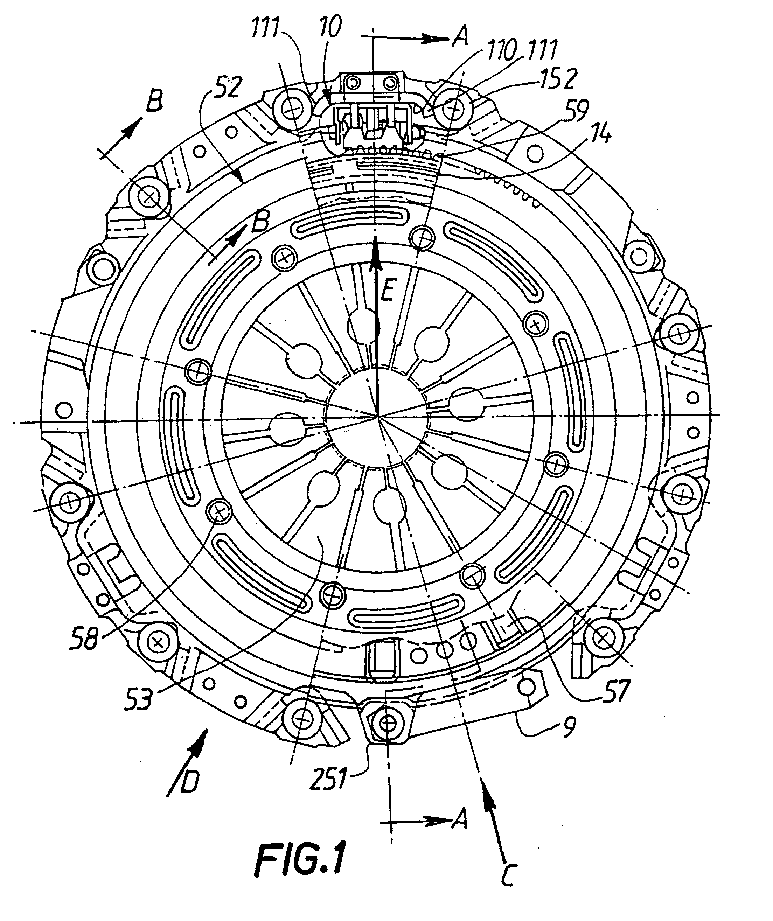

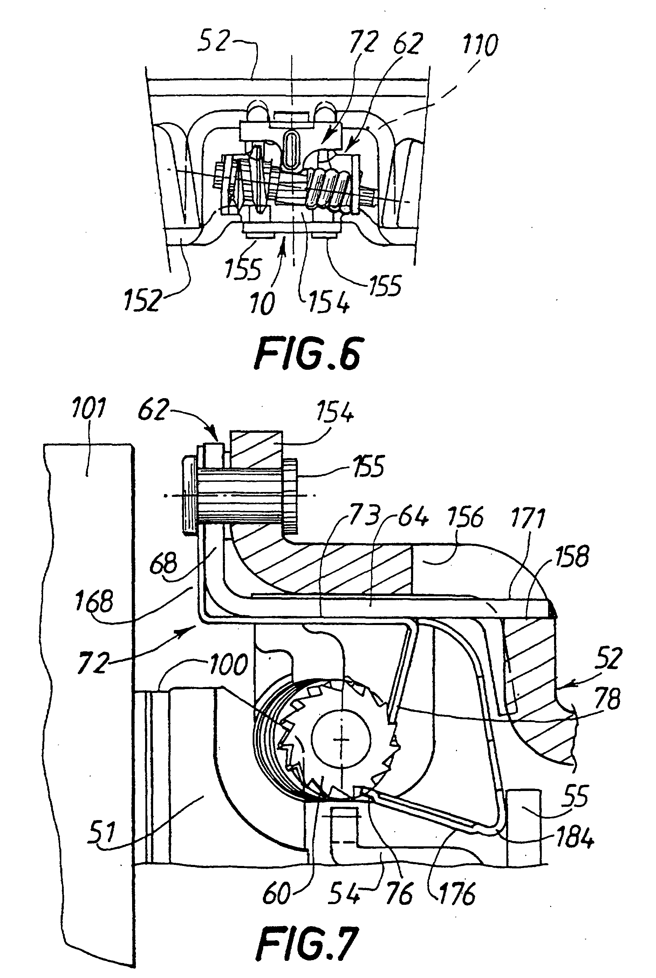

En se reportant aux figures, on voit un mécanisme d'embrayage à friction, notamment pour véhicule automobile, d'axe de symétrie axiale X-X, qui forme un ensemble unitaire et qui comprend un plateau de pression 51 destiné à coopérer avec un disque de friction (représenté schématiquement à la figure 7 en 100), portant à sa périphérie externe des garnitures de friction, qui coopère lui-même avec un plateau de réaction. Le plateau de réaction, représenté schématiquement en 101 à la figure 1, est destiné à être calé en rotation sur un arbre menant, tel que le vilebrequin du moteur à combustion interne. Le disque de friction est solidaire en rotation d'un arbre mené tel que l'arbre d'entrée de la boîte de vitesses.

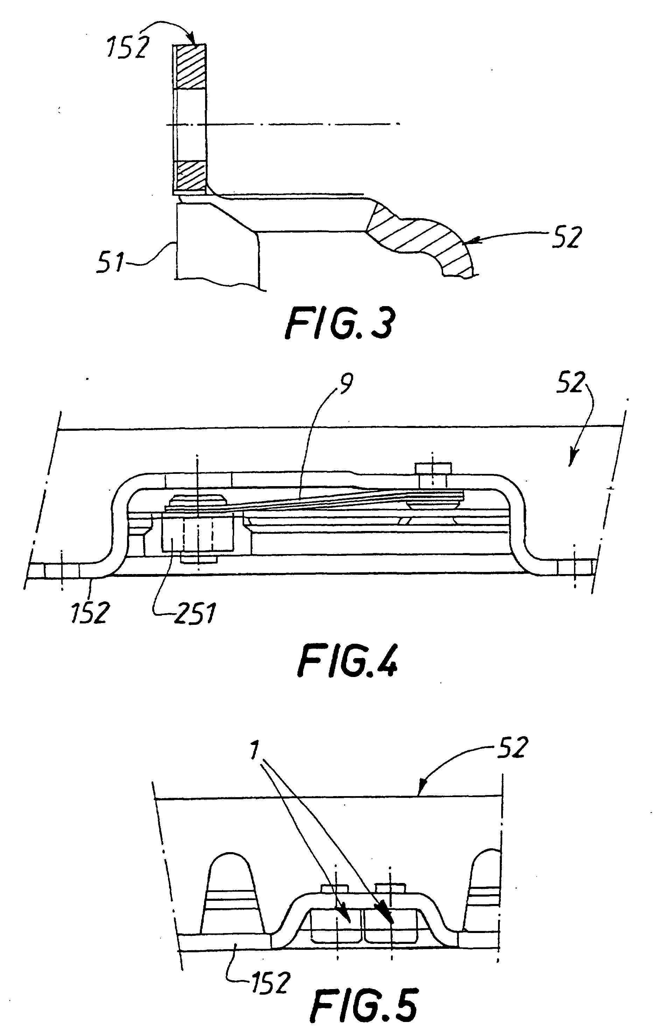

Le plateau de pression 51 est solidaire en rotation du couvercle 52 par l'intermédiaire de languettes tangentielles 9 dont une est visible sur la figure 4 et qui, élastiques axialement, constituent en même temps des moyens de rappel du plateau de pression 51 vers le couvercle 52.

Les languettes 9 sont fixées par rivetage à l'une de leur extrémité au couvercle et à leur autre extrémité à une patte 251 du plateau de pression (figure 4).

Les languettes 9 autorisent un mouvement axial du plateau de pression 51 par rapport au couvercle 52. Le couvercle est métallique en étant en tôle emboutie. Ce couvercle 52 comporte un fond, d'orientation transversale, troué centralement et des moyens 152 pour sa fixation à un plateau de réaction, éventuellement divisé pour formation d'un volant amortisseur.

Ici le couvercle 52 est globalement en forme d'assiette creuse et comporte à sa périphérie externe un rebord radial 152 formant les moyens de fixation du couvercle au plateau de réaction, ledit rebord étant doté de trous pour passage d'organes de fixation, tels que des vis, du couvercle au plateau de réaction.

Une jupe annulaire d'orientation axiale relie le fond au rebord et est ouverte au niveau des languettes 9 (figure 4).

Ici le plateau de réaction 101 est plat. En variante ce plateau présente une jupe sur laquelle se fixe le rebord 152 en sorte que le couvercle 52 peut être moins profond.

Le plateau de pression 51, tout en étant solidaire en rotation du couvercle 52, est donc déplaçable axialement par rapport au couvercle 52 sous la sollicitation de moyens embrayeurs à action axiale commandés par des moyens débrayeurs, ici un diaphragme 53 monté articulé sur le couvercle 52 grâce à des colonnettes 58 portées par le fond du couvercle 52 troué centralement.

Le diaphragme 53, formant moyen élastique à action axiale, a une forme tronconique à l'état libre et comporte une partie périphérique en forme de rondelle Belleville prolongée vers le centre par une partie centrale fragmentée en doigts radiaux par des fentes comme visible à la figure 1.

Le diaphragme 53 prend appui, par l'intermédiaire de sa rondelle Belleville, sur le fond du couvercle pour action sur le plateau de pression 51 et serrage des garnitures de friction, que présente le disque de friction, entre les plateaux de pression et de réaction.

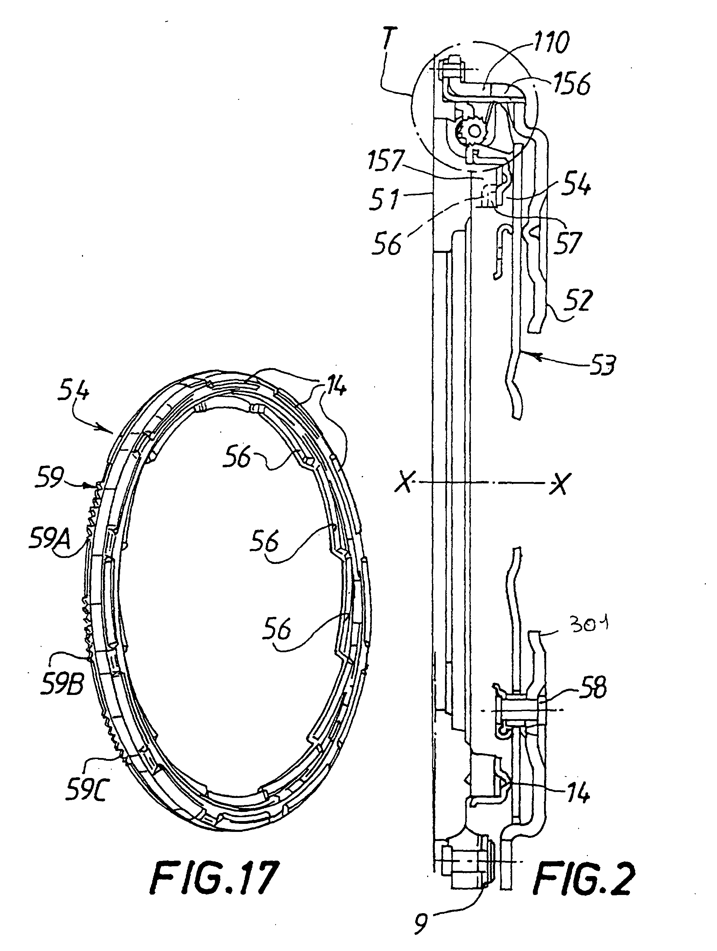

Ici l'embrayage est du type poussé, c'est-à-dire qu'il faut, à l'aide d'une butée de débrayage, commandée manuellement ou de manière semi-automatique ou automatique et non représentée, agir en poussant sur l'extrémité interne des doigts du diaphragme 53 pour désengager (débrayer) l'embrayage. Pour ce faire (figure 2), le fond du couvercle 52 porte, d'une part, un appui primaire consistant par exemple en un jonc, ou ici en un embouti réalisé dans le fond du couvercle à la périphérie interne de celui-ci et, d'autre part, en regard de l'appui primaire, un appui secondaire sous forme de couronne roulée portée par les colonnettes 58, ou tout autre moyen. Le diaphragme 53, par la périphérie interne de sa rondelle Belleville, est monté de manière basculante ou pivotante entre lesdits appuis primaire et secondaire. Par la périphérie externe de sa rondelle Belleville, il est en contact avec des zones d'appui 14, décrites ci-après. Ces zones 14, formant moyens d'appui, sont portées par le plateau de pression 51.

Pour maintenir, lorsque l'embrayage est embrayé, les moyens embrayeurs à action axiale 53 dans une position indépendante de l'usure des garnitures du disque de friction, et dans une moindre mesure l'usure des plateaux de pression 51 et de réaction dont les faces, dites de friction, s'usent au contact des garnitures du disque, il est prévu un dispositif de rattrapage d'usure 10.

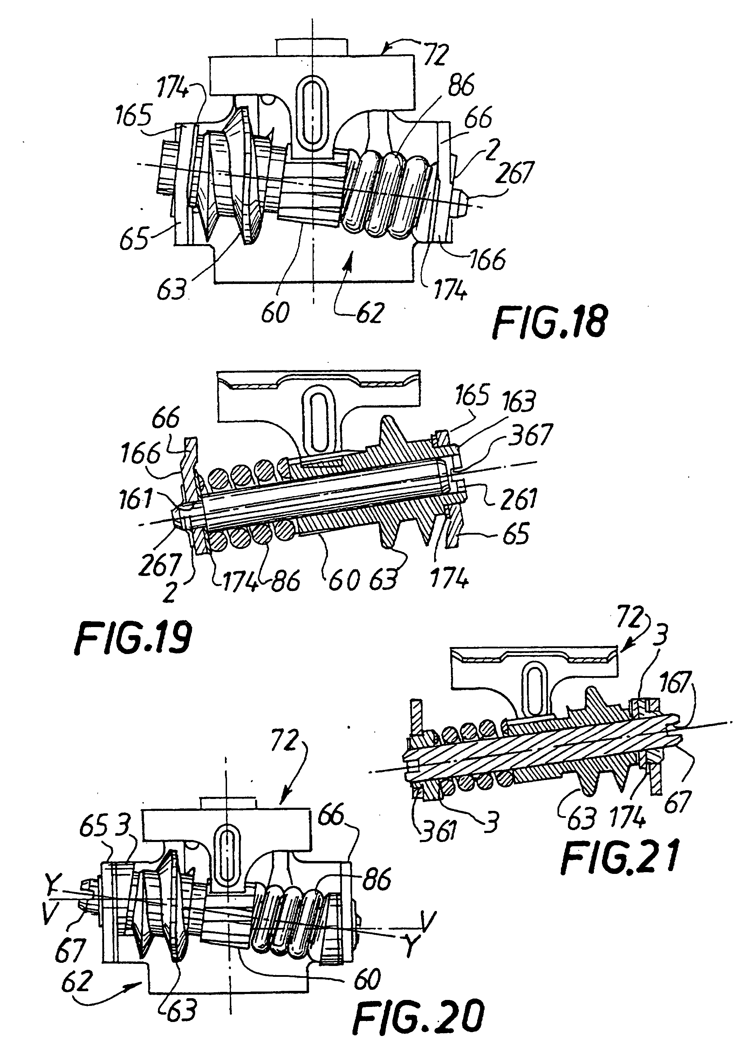

Le dispositif de rattrapage d'usure comprend une cassette 10 et des moyens à rampes 54 disposés circonférentiellement ; plus précisément, ces moyens à rampes 54 sont constitués d'un anneau en tôle découpée et emboutie de façon à présenter des rampes 56 disposées circonférentiellement ; ledit anneau présente également des zones d'appui 14 constituées par l'arête supérieure arrondie d'emboutis en arcs de cercle centrés sur l'axe de l'embrayage et placés radialement à l'extérieur par rapport aux rampes 56 (figures 2 et 17).

Le plateau de pression 51 présente ici, venus de moulage, sur sa face tournée vers le fond du couvercle 52, radialement au-delà des colonnettes 58, des plots 57 répartis circonférentiellement à une distance l'un de l'autre qui correspond à celle qui sépare circonférentiellement deux rampes 56 successives, les plots 57 étant destinés à coopérer chacun avec une rampe 56.

Le rebord 152 présente des plages décalées axialement en direction du fond du couvercle pour porter des rivets d'équilibrage 1 (figure 5) pour équilibrer le mécanisme d'embrayage comportant de manière unitaire le couvercle 52, le plateau de pression 51, le diaphragme 53 et le dispositif de rattrapage d'usure.

Les moyens à rampes 54 sont placés axialement entre le diaphragme 53 et le plateau de pression 51 en sorte que les plots 57 reçoivent les rampes 56 et que le diaphragme 53 coopère avec les zones d'appui 14 qui constituent ainsi les moyens d'appui, ici fractionnés en variante continue, par l'intermédiaire desquels le diaphragme 53 agit sur le plateau de pression 51. Cette disposition est économique et simple, les moyens à rampes 54 étant métalliques et obtenus par emboutissage. En variante les plots 57 sont remplacés par des contre-rampes de même forme que les rampes 54.

L'une au moins des zones d'appui 14 des moyens à rampes 54 est prolongée à sa périphérie externe par un rebord parallèle à l'axe de l'embrayage se terminant selon un retour transversal, c'est-à-dire s'étendant dans un plan perpendiculaire à l'axe X-X de l'embrayage, muni à sa périphérie externe d'une denture 59, en sorte que les zones d'appui 14 peuvent être continues et que le rebord est centré par une surépaisseur 157 du plateau de pression 51.

C'est dans chaque surépaisseur 157 que sont formés les plots 57. Toutes les surépaisseurs 157 peuvent participer au centrage de l'anneau 54 présentant un rebord continu. En variante toutes les surépaisseurs 157 ne participent pas un centrage. De même le rebord de l'anneau 54 peut ne pas être continu. Cet anneau 54 comporte donc un nombre moindre de zones de centrage qu'il n'y a de plots 57, sachant que chaque zone de centrage est associée à une rampe 56.

Avantageusement les plots 57 et donc les surépaisseurs 157 sont chanfreinées pour coopérer de manière complémentaire avec les rampes 56. Dans tous les cas les plots 57 forment des contre-rampes.

Le nombre de plots 57 et de rampes 56 dépend des applications, il en est de même des zones de centrage complémentaires formées respectivement à la périphérie externe des plots 57 et à la périphérie interne du ou des rebords axiaux de l'anneau 54.

Ainsi douze rampes 56 et plots 57 peuvent être prévus. Douze surépaisseurs 157 peuvent former la zone de centrage en association avec douze zones de centrage appartenant à l'anneau.

En variante six surépaisseurs 157 peuvent former la zone de centrage, l'anneau 54 présentant six zones de centrage et vice versa. Le plateau de pression 51 porte donc les zones d'appui 14 et les moyens à rampes 54 mobiles en rotation, tandis que le plateau de pression est fixe en rotation. Ce plateau 51 a ainsi une épaisseur variable. Plus précisément la distance entre sa face frontale, servant de face de friction au disque de friction 100, et les zones d'appui 14 varient en fonction des usures précitées.

Bien entendu on peut réaliser les rampes et les contre-rampes à l'aide du système vis-écrou. Par exemple un anneau portant les zones d'appui 14 présente un filetage interne pour se visser sur un filetage externe du plateau de pression.

Le dispositif de rattrapage d'usure comprend par ailleurs une roue à rochet 60 à dents inclinées solidaire d'un axe 67 qui porte également une vis sans fin 63 ; le filet et le pas de la vis sans fin 63 sont adaptés à la denture 59 ; la vis sans fin 63 est amenée à coopérer avec la denture 59 dans les conditions qui seront décrites ci-après. La vis 63 s'étend tangentiellement par rapport à la denture.

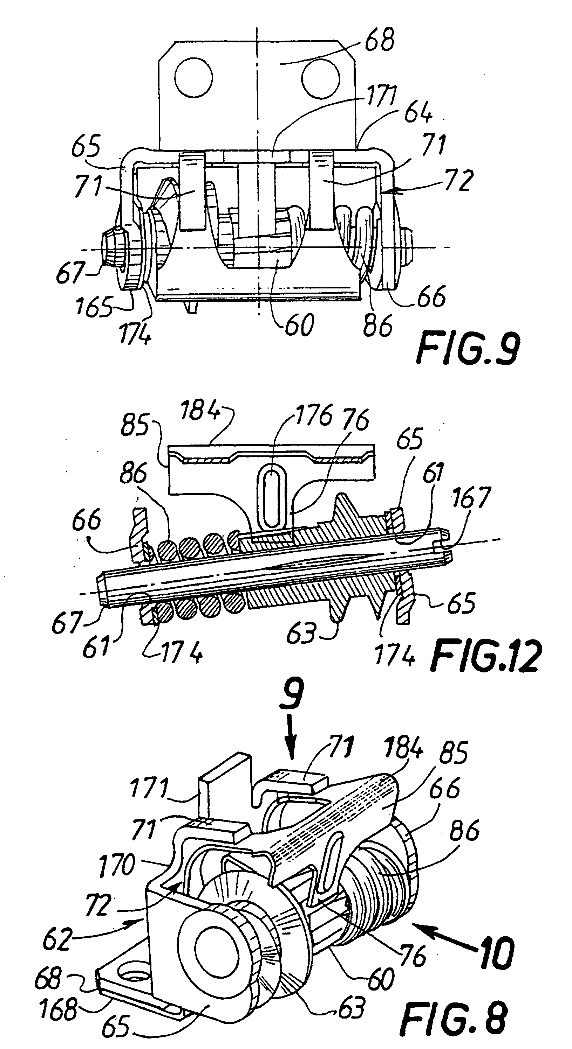

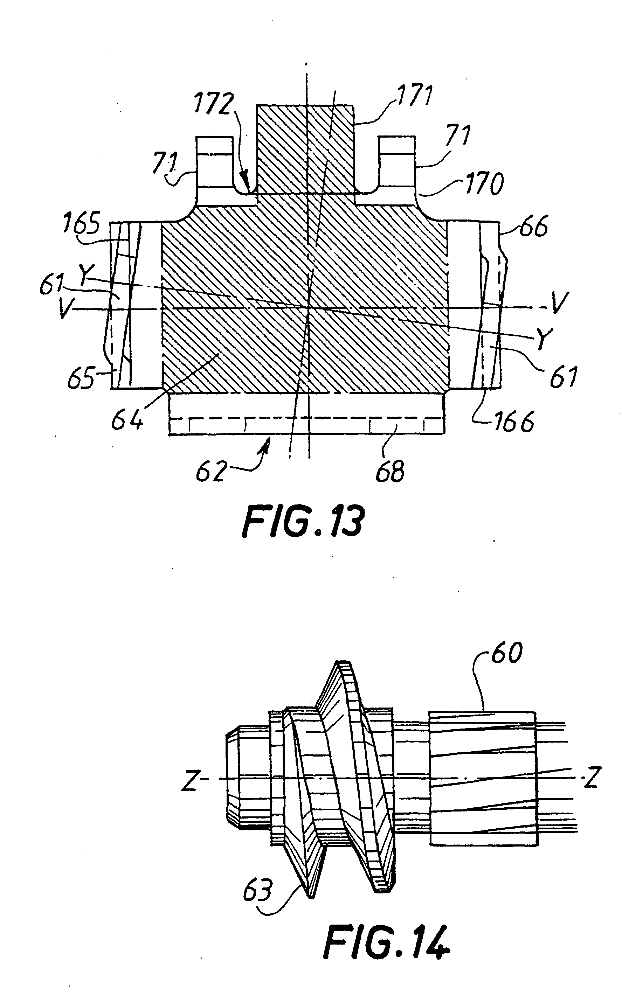

L'axe 67 de la roue à rochet 60 est porté à rotation par un support 62, mieux visible sur les figures 8 et 13, en tôle découpée et pliée, en forme de U ayant une âme 64 et deux ailes 65,66 destinées à supporter l'axe 67. A cet effet, chacune des ailes porte un trou circulaire 61 (figure 12) adapté à le recevoir ; l'âme 64 porte latéralement une patte 68 à l'équerre dirigée radialement vers l'extérieur et destinée à être fixée sur une plage 154 du rebord externe 152 du couvercle 52 par deux rivets 155, ladite plage étant décalée axialement vers le fond du couvercle 52. Le couvercle 52 présente une ouverture 156 (figure 7) pour passage de l'âme et est simplifié.

Selon une caractéristique l'âme 64, d'orientation axiale, s'appuie sur le bord 158 de l'ouverture 156 affectant le fond du couvercle 52. On peut fixer l'âme 64 sur le bord 158 appartenant au fond du couvercle 52, par exemple par collage, soudage ou sertissage.

Dans le cas d'une fixation par sertissage l'âme 64 est épaulée et traverse une entaille réalisée dans le rebord 158. Après traversée du rebord, les extrémités latérales de l'âme sont écrasées à chaud pour réaliser le sertissage.

Plus précisément l'âme 64 du support 62 présente, du côté opposé à celui où est située la patte 68, un prolongement axial 170 destiné à être fixé au fond du couvercle 52. Ce prolongement est muni de retours 71 s'étendant globalement perpendiculairement à l'âme 64 et destinés à constituer des butées de contrôle dont le rôle apparaîtra ci-dessous ; les extrémités desdits retours 71 sont à une distance suffisante l'une de l'autre pour permettre, sans le gêner, le débattement de l'actionneur 55 lors des opérations d'embrayage et de débrayage.

L'actionneur 55 est constitué par une protubérance (ou appendice) que comporte le diaphragme 53 radialement en saillie à sa périphérie externe.

En pratique les retours 71 s'étendent radialement au-dessus de l'actionneur 55 et sont inclinés (figures 7,8,9 et 13). Ces retours 71 sont issus par découpe et pliage du prolongement axial 170 de l'âme 64, dont on a hachuré à la figure 13 sa zone plane. Les retours 71 sont disposés ainsi de part et d'autre d'une patte axiale 171 et sont séparés de celle-ci par des échancrures à fond 172 semi-circulaire.

Cette patte 171 s'étend en saillie axiale par rapport aux retours et est en appui à son extrémité libre contre le bord 158. Cette patte 171 est fixée à son extrémité libre au bord 158 de manière précitée par exemple par soudage, comme visible à la figure 7. Le bord 158 forme une portée d'appui pour la patte 171.

Le support 62 est ainsi de forme simple et est stable.

Il est beaucoup plus simple que celui décrit dans le document FR 96 11297 précité car les retours 71 ne sont pas issus des ailes du support. En outre la patte 171 permet de diminuer le nombre de rivets de fixation et est une patte de fixation et de stabilisation.

On réduit grâce à l'invention le nombre de pattes de fixation au couvercle.

Compte tenu de l'ouverture 156 affectant le couvercle 52 au niveau de la zone de raccordement de la jupe du couvercle au fond du couvercle, le soudage, le collage ou le sertissage de la patte 171 au bord 158 de l'ouverture est aisé.

Le support 62 est adapté à recevoir un organe élastique 72.

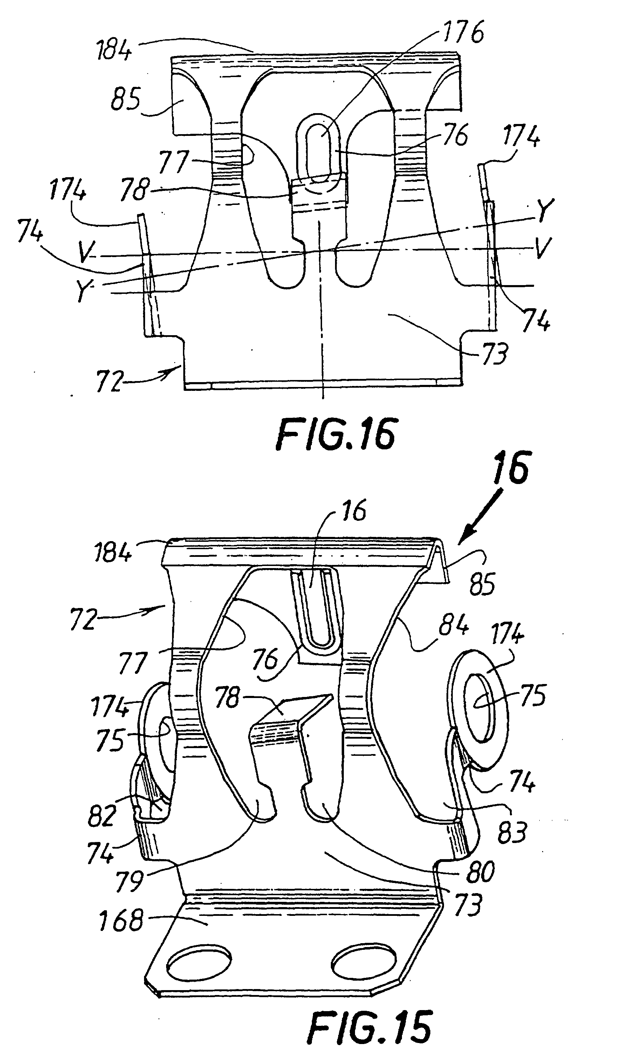

Ici, l'organe élastique 72, mieux visible sur la figure 15, est en forme de cavalier et comprend un corps 73 plan allongé portant à chacune de ses extrémités un bras 74 muni d'un trou 75 adapté à recevoir l'axe 67 ; les deux bras 74 sont parallèles, de manière décrite ci-après, et s'étendent du même côté et globalement perpendiculairement par rapport au corps 73.

Sur l'un de ses bords longitudinaux, le corps 73 se prolonge selon une extension en oblique 84 du même côté que celui où sont placés les bras 74 ; des échancrures 82 et 83 ménagées dans le corps 73 limitent l'extension 84 par rapport aux extrémités du corps 73 portant les bras 74 ; par ailleurs, ces échancrures 82 et 83 confèrent à l'extension 84 une certaine élasticité.

L'extrémité libre de l'extension 84 est munie d'un retour 85 qui se prolonge selon une languette de commande 76 s'étendant en direction du corps 73 en étant globalement parallèle à celui-ci.

Une découpe 77 est ménagée dans l'extension 84 ; à la faveur de cette découpe 77 et d'échancrures 79 et 80 dans le corps 73, est réalisé un cliquet anti-retour 78 en forme de lame. L'extrémité libre du cliquet 78 s'étend globalement perpendiculairement au corps 73.

Ici comme mieux visible à la figure 11, la languette de commande 76 et le cliquet 78 sont légèrement inclinés respectivement par rapport au plan du corps 73 et au plan perpendiculaire au plan du corps 73.

Le cliquet 78 est décalé par rapport à la languette 76, les extrémités libres du cliquet 78 et de la languette 76 étant décalées circonférentiellement.

Un ressort hélicoïdal 86 de compression est placé entre la roue à rochet 60 et l'extrémité libre du bras 74, en étant enroulé autour de l'axe 67 ; la vis sans fin 63 et la roue à rochet 60 sont taillées dans une même pièce.

La roue à rochet 60 est implantée entre la vis 63 et le ressort 86.

Le ressort hélicoïdal 86 constitue le moyen élastique de rattrapage ; la roue à rochet 60 est au droit du cliquet anti-retour 78 qui, par coopération avec les dents inclinées de la roue à rochet 60, empêche de tourner la roue à rochet 60, ainsi que la vis sans fin 63, dans le sens contraire à celui des aiguilles d'une montre, par rapport à la figure 1.

Le support 62, portant la roue à rochet 60, la vis sans fin 63 et le ressort hélicoïdal 86, étant solidaire du couvercle 52, le diaphragme 53 se déplace par rapport à lui lors des opérations de débrayage et de réembrayage ; le diaphragme 53 porte à sa périphérie un appendice radial (ou protubérance radiale), dit actionneur 55, s'étendant radialement à l'extérieur de la partie rondelle Belleville du diaphragme 53 pour coopérer avec l'extension 84 de l'organe élastique 72, plus précisément avec une zone arrondie 184 raccordant la partie principale de l'extension au retour 85 (figure 7) ; on comprendra que, grâce à cette disposition, lors du basculement du diaphragme 53 lors des opérations de débrayage et de réembrayage, l'actionneur 55 déplace l'extension 84 de la droite vers la gauche, par rapport à la figure 1, et la languette de commande 76, par coopération avec les dents de la roue à rochet 60, est amenée à faire tourner la roue à rochet 60 dans le sens horaire et donc à faire tourner la vis 63 en comprimant le ressort 86 ; lorsque l'actionneur 55, au retour, est déplacé de la gauche vers la droite, l'élasticité de l'extension 84 de l'organe élastique 72 et l'inclinaison des dents font que la languette 76 se déplace vers la droite en montant sur les dents qui sont maintenues fixes en rotation par le cliquet anti-retour 78.

Le fonctionnement du dispositif de rattrapage de jeu qui vient d'être décrit est connu et ne sera pas détaillé ; si besoin est, on pourra se reporter à la demande de brevet français 96 11 297 déjà citée dont la partie de la description correspondante doit être considérée comme faisant partie de la présente demande, sachant que lors de l'opération de débrayage la course de retour ou d'armement de la languette de commande 76 est limitée par venue en butée de l'extension 84, plus précisément de la zone arrondie 184, contre les retours 71 du support 62 plus épais que l'organe 72.

Les retours 71 (271 dans les autres figures) ont pour rôle de ménager l'organe élastique 72.

Ici, la vis sans fin 63 et la roue à rochet 60 sont d'une seule pièce et sont enfilées à force sur l'axe 67 porté par le support 62. L'axe 67 est cannelé pour son emmanchement à force dans la pièce 60,63 et traverse les trous 61 des ailes 65 et 66 du support 62. Il est formé ainsi un équipage - axe 67, roue 60, vis 63, ressort 86 - porté par les ailes 66,65. Ici l'axe 67 est donc solidaire de l'ensemble monobloc vis sans fin 63 - roue à rochet 60, qui est immobilisé axialement par les deux bras 74 et les deux ailes 65,66 respectivement de l'organe élastique 72 et du support 62. Pour ce faire les bras 74 présentent une extrémité libre en forme de rondelle 174 (figure 15) trouée en 75.

Une des rondelles 174 est interposée axialement entre la face interne de l'aile 65 et l'extrémité libre de la vis sans fin 63, s'étendant ici sur moins de deux tours, ici 1/25 de tours, tandis que l'autre rondelle 174 est interposée entre la face interne de l'aile 66 et l'extrémité libre du ressort hélicoïdal 86.

Il est ainsi formé de manière unitaire une cassette 10 manipulable et transportable comportant des pièces, ici toutes métalliques, à savoir le support 62, l'organe élastique 72, le ressort hélicoïdal 86, la roue à rochet 60, la vis sans fin 63 et l'axe 67, sachant que l'organe élastique 72 (figures 8 et 11) comporte à son extrémité opposée à l'extension 83 une patte 168 d'orientation radiale accolée à la patte 68 du support 62. Le corps 73 est accolé à l'âme 64. La patte 168 présente, comme la patte 68, deux trous pour le passage de rivets de fixation 155.

On notera que la périphérie externe du plateau de pression 51 est entaillée localement pour le logement de la cassette 10 (figure 7) et réduction de l'encombrement axial.

Bien entendu un logement 110 est formé en surépaisseur, ici par déformation à la presse, au niveau de la plage 154 de rebord 152 du couvercle 52 pour montage de la cassette 10 (figures 1 et 7).

Le logement 110 est délimité par la plage 154 solidaire d'une âme d'orientation centrale (non référencée) dont l'extrémité opposée à la plage 154 est dotée de l'ouverture 156.

Ici trois logements 110 sont prévus, comme visible à la figure 1. Un seul logement sert au montage de la cassette 10.

Deux portions latérales inclinées 111 relient l'âme à des plages trouées du rebord 152 pour le passage des organes de fixation du couvercle au plateau de réaction.

Le logement 110 protège la cassette 10 et est ouvert au niveau de la plage 154.

Des découpes (non référencées) sont réalisées dans les portions 111 s'étendant de part et d'autre de l'âme centrale du logement 110. Les extrémités de l'axe 67 dépassent des ailes 65,66. L'axe 67 présente une fente 167 au niveau de son extrémité dépassante de l'aile 65. Il est créé ainsi des moyens de remise à zéro du dispositif de rattrapage d'usure.

Pour cette remise à zéro, il est prévu un outil non visible.

Cet outil peut être en forme de tournevis dont la lame pénètre dans la fente 167. En variante l'outil est constitué d'une tige dont une extrémité porte un bouton de manoeuvre, par exemple moleté, et dont l'autre extrémité est plate pour pénétrer dans la fente 167.

Les découpes réalisées dans les portions 111 du couvercle 52 permettent de définir un passage en alignement avec l'axe 67 pour le passage de l'outil.

L'opération de remise à zéro du dispositif de rattrapage d'usure découle aisément de la description qui précède.

Pour plus de précisions on se reportera au document FR 97 06655 du 30 mai 1997 montrant une forme d'outil.

Lorsque l'outil est en place, le calage en rotation de la vis sans fin 63 par rapport à l'outil permet, en tournant l'outil, de faire tourner la vis sans fin 63 par rapport au couvercle 52, donc la denture 59 par rapport au plateau de pression 51, et les rampes 56 par rapport aux plots 57.

La longueur circonférentielle de la denture 59 correspond à la quantité d'usure que l'on a décidé de rattraper, compte tenu évidemment des quelques dents avec lesquelles engrène la vis sans fin 63 à l'état initial.

Lorsque la quantité d'usure choisie correspondant à la longueur circonférentielle de la denture 59 a été rattrapée, la vis sans fin 63 ne coopère plus avec la denture 59.

Lors du changement de disque de friction, pour remettre à zéro le dispositif de rattrapage d'usure, il suffit avec un outil quelconque de faire tourner autour de leur axe les moyens à rampes 54 pour que les rampes 56 montent sur les plots 57 jusqu'à ce que la première dent de la denture 59 rencontre le premier filet de la vis sans fin 63 ; par rotation de la vis sans fin 63 grâce à l'outil de mise à zéro, on met alors en prise quelques premières dents de la denture 59 avec les filets de la vis sans fin 63.

L'angle dont il faut faire tourner les moyens à rampes 54 dans la première phase de la mise à zéro dépend du nombre de dispositifs de rattrapage d'usure ; usuellement, il n'y a qu'un dispositif de rattrapage d'usure en sorte que l'angle est grand. Pour minimiser cet angle quel que soit le nombre de dispositifs, il est possible de prévoir une denture 59 composée de plusieurs éléments de dentures tels que les éléments 59A, 59B, 59C montrés sur la figure 17 : avantageusement de manière précitée, il y a autant d'éléments de denture que de rampes 56, chaque élément correspondant à l'usure choisie d'un disque de friction ; les rampes 56 sont en vis-à-vis des éléments de dentures 59A, 59B, 59C.

Bien entendu l'organe élastique 72, ici métallique, est d'épaisseur inférieure à celle du support 62 afin de rendre souple le cliquet 78 et la languette de commande 76 qui présente centralement un bossage 176, ici de forme oblongue. Grâce à ce bossage 176 toutes les contraintes mécaniques sont ramenées vers le centre de la languette 76 en sorte que la languette 76 est moins fragile. Cette disposition permet d'augmenter la durée de vie de la languette 76, le bossage 76 étant un embouti.

Comme mieux visible à la figure 14 les dents de la roue à rochet 60 sont inclinées par rapport à l'axe Z-Z de symétrie axiale de l'ensemble roue à rochet 60 - vis sans fin 63. Les dents de la roue 60 sont au droit du cliquet 78, formant cliquet anti-retour, et de la languette de commande 76.

Suivant une caractéristique de l'invention l'axe 67 et donc l'ensemble monobloc vis 63 - roue 60 est incliné.

Dans toutes les figures cette inclinaison est réalisée par un décalage axial des centres des trous 61 des ailes 66,65 perpendiculaires à l'âme 64.

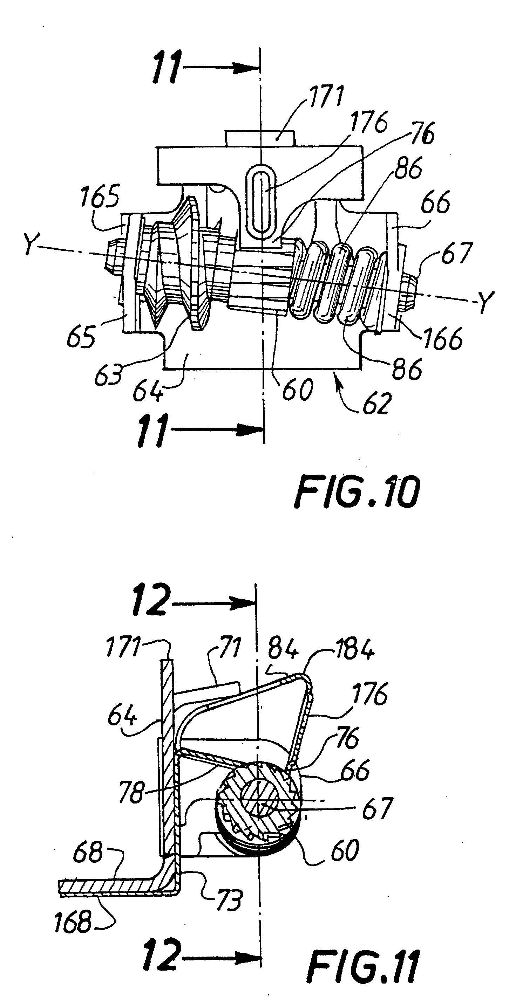

Plus précisément (figures 1 à 17) le centre du trou 61 de l'aile 65 adjacente à la vis 63 est plus près axialement du fond du couvercle 52 que ne l'est le centre du trou 61 de l'aile 66 adjacente au ressort 86. L'inclinaison de l'axe 67 et donc de la vis 63 est fonction de l'inclinaison du filet et du pas de la vis 63.

Ici le système vis 63 - denture 59 est irréversible, la vis 63 peut entraîner la denture 59 mais pas l'inverse.

Ici l'angle d'inclinaison de l'axe 67 est globalement d'un angle égal à celui du filet de la vis sans fin.

Grâce à cette disposition les dents de la denture 59 sont droites ce qui facilite l'entraînement par engrènement et évite tout coincement, la surface de contact entre le filet de la vis 63 et les dents de la denture étant maximum. L'axe 67 est donc incliné par rapport à un plan perpendiculaire à l'axe de symétrie axial X-X de l'embrayage et du mécanisme d'embrayage, sachant que la vis 63 s'étend tangentiellement par rapport à la denture 59.

Grâce à ces dispositions le système denture 59 - vis sans fin 63 est d'un bon rendement, le filet de la vis s'étendant globalement parallèlement aux flancs des dents de la denture.

Les dents de la roue à rochet 60 sont inclinées en fonction de l'inclinaison de l'axe 67 correspondant à l'angle que font entre elles les lignes V-V et Y-Y à la figure 13.

Plus précisément on recherche un contact droit (parallèle) entre, d'une part, les dents de la roue à rochet 60 et, d'autre part, le cliquet anti-retour 78 et la languette de commande 76. Il en résulte, suivant une caractéristique de l'invention, que l'extrémité libre du cliquet 78 est inclinée d'un angle en fonction de l'inclinaison de l'axe 67, lui-même dépendant du filetage de la vis sans fin 63. Cette inclinaison est visible par exemple dans les figures 8,15,16.

Cette inclinaison dépend du décalage circonférentiel entre les extrémités libres du cliquet 78 et de la languette 76 (figures 7 et 11).

Les zones de contact entre les dents de la roue 60 et les extrémités libres du cliquet 78 et de la languette sont maximum et linéaires.

Le cliquet 78 et la languette 76 portent sur toute la surface de la dent concernée de la roue à rochet.

Plus précisément grâce à l'inclinaison des dents de la roue à rochet, l'extrémité libre de la languette de commande 76 est parallèle à la dent en regard de la roue à rochet 60, donc aux dents de ladite roue.

Par contre, du fait du décalage du cliquet 78 par rapport à la languette 76, l'extrémité libre du cliquet 78 n'est alors pas parallèle à la dent en regard de la roue 60 si l'on ne prend pas de précautions.

Ainsi, comme mieux visible dans les figures 15 et 16, le cliquet est vrillé pour tenir compte de ce décalage. Ce vrillage conduit à incliner l'extrémité libre du cliquet 78 par rapport à l'extrémité libre droite de la languette de commande 76.

Le cliquet 78 est donc vrillé pour coopérer de manière droite, c'est-à-dire de manière parallèle avec les dents de la roue à rochet 60.

Grâce à ces dispositions la zone de contact entre l'actionneur 55 et l'organe élastique 72 est maximum, sachant qu'en position embrayage engagé le diaphragme est globalement dans un plan perpendiculaire à l'axe X-X du mécanisme d'embrayage et de l'embrayage.

L'organe élastique 72 est en contact linéaire par sa zone arrondie 184 avec toute la surface de l'actionneur 55 du diaphragme et ce dans toutes les positions du diaphragme.

Lors du réengagement de l'embrayage, on obtient une bonne transmission des efforts, grâce notamment à l'embouti 176 formant bossage, avec des contacts maximum entre, d'une part, l'actionneur 55 et l'organe élastique 72 et, d'autre part, entre les dents de la roue 60 et la languette de commande 76. Le dispositif de rattrapage d'usure présente donc un rendement encore amélioré avec des risques de coincements encore minimisés.

Suivant une caractéristique le retour 85 de l'organe élastique 72 a une forme non symétrique qui tient compte de l'inclinaison de l'axe 67 des pièces 63,60,86 implantées entre les deux ailes 66,65.

Le retour 85 porte centralement en saillie la languette 76 et présente deux tronçons de part et d'autre de la languette.

Le premier tronçon implanté en regard de la vis 63 est moins haut que le deuxième tronçon implanté en regard du ressort 86 de rattrapage.

Ainsi le retour 85 a une résistance mécanique maximum en liaison avec l'embouti 176 permettant une bonne transmission des efforts car il est perpendiculaire à la zone arrondie 184. Bien entendu l'extrémité libre de la languette 76 et du cliquet 78 est moins large que les dents de la vis 60.

Ici les ailes 65 et 66 sont vrillées, ainsi que les bras 74, pour incliner l'axe 67 en fonction du filetage de la vis 63 tangentielle.

Plus précisément les extrémités libres des ailes 65 et 66 et des bras sont inclinées en étant perpendiculaires à l'axe 67 de ligne de symétrie Y-Y inclinée par rapport à une ligne V située dans un plan perpendiculaire à l'axe X-X et à l'âme 64 (figure 13).

Ainsi les ailes 65,66 présentent une partie principale perpendiculaire à l'âme 64 et au niveau des trous 61 des zones inclinées 165,166 parallèles entre elles et perpendiculaires à la ligne Y-Y et à l'axe 67. Les zones 165,166 sont inclinées vers l'intérieur de l'âme 65 et comportent les trous 61.

Grâce à cette disposition on n'augmente pas, outre mesure, l'encombrement.

De même les rondelles d'extrémité 174 des bras 74 de l'organe 72 sont inclinées et parallèles entre elles et aux zones 165,166.

Ainsi la cassette 10, notamment le support 62 de celle-ci a, un encombrement plus réduit que si l'on avait incliné toute la cassette, tout en étant de forme simple.

Bien entendu (figures 18,19), l'axe 67 peut ne pas être solidaire de l'ensemble vis 63 - roue 60.

Dans ce cas, sans modifier les ailes 65,66, il suffit de diminuer la taille des trous que présentent les zones inclinées 165,166 des ailles 65,66.

Ainsi l'axe 67 présente une extrémité de diamètre réduit 267 traversant la rondelle 174 et un trou 161 de la zone inclinée 166 de l'aile 66. L'axe pénètre dans l'alésage de la pièce monobloc 63,60.

La vis 63 présente un prolongement cylindrique 163, de diamètre supérieur à celui de l'axe traversant la rondelle 174 et un trou 261 de la zone inclinée 165 de l'aile 65. Le tour 261 a un diamètre supérieur à celui du trou 161 et le prolongement 163 présente une fente 367 pour pouvoir tourner la vis 63 à l'aide d'un outil et effectuer la remise à zéro comme dans les figures 1 à 17.

L'axe 67 est immobilisé axialement grâce à l'épaulement formé par son changement de diamètre et en contact avec la face de la rondelle 174 tournée vers le ressort 86 et à une rondelle élastique 2 présentant des bras en contact avec l'extrémité 267, ladite rondelle 2 étant en contact avec la face externe de la zone 166 de l'aile 66.

Les trous 161,261 sont décalés axialement l'un par rapport à l'autre. La pièce 60-63 tourne sur l'axe immobilisé également en rotation par la rondelle 2.

D'une manière générale l'équipage des pièces 63,60,86,87 est porté par les ailes 66,65 trouées et l'axe 67 traverse au moins le trou 61,161 de l'une des ailes 66,65.

En variante (figures 20,21) les ailes 65,66 ne sont pas vrillées ainsi que les bras 74. Les trous 361 pratiqués dans les ailes 65,66 sont décalés axialement et ont la même taille pour montage d'un palier épaulé 3 troué centralement.

Le palier 3, avantageusement en matière moulable ou en matériau fritté, à faible coefficient de frottement tel que de la matière plastique, présente un changement de diamètre pour formation d'un épaulement permettant d'immobiliser axialement le bras 74 concerné entre ledit épaulement et la face interne de l'aile 65,66 concernée.

Le trou central du palier 3 est incliné en fonction des applications. L'axe traverse les paliers 3.

Ainsi, grâce aux trous centraux inclinés des paliers 3, on incline l'axe 67 de la valeur recherchée pour un contact maximum entre la vis tangentielle 63 et les dents de la denture 64. Comme dans toutes les figures, le filet de la vis 63 a une trajectoire (un déplacement) parallèle à celle des dents de la denture 59, les faces dorsales des paliers sont inclinées de façon à être parallèles respectivement à la face d'extrémité de la vis 63 et à l'extrémité du ressort 86.

L'axe 67 présente des fentes 167 pour la remise à zéro, l'axe 67 étant emmanché à force comme dans les figures 1 à 17 dans la pièce 60,63.

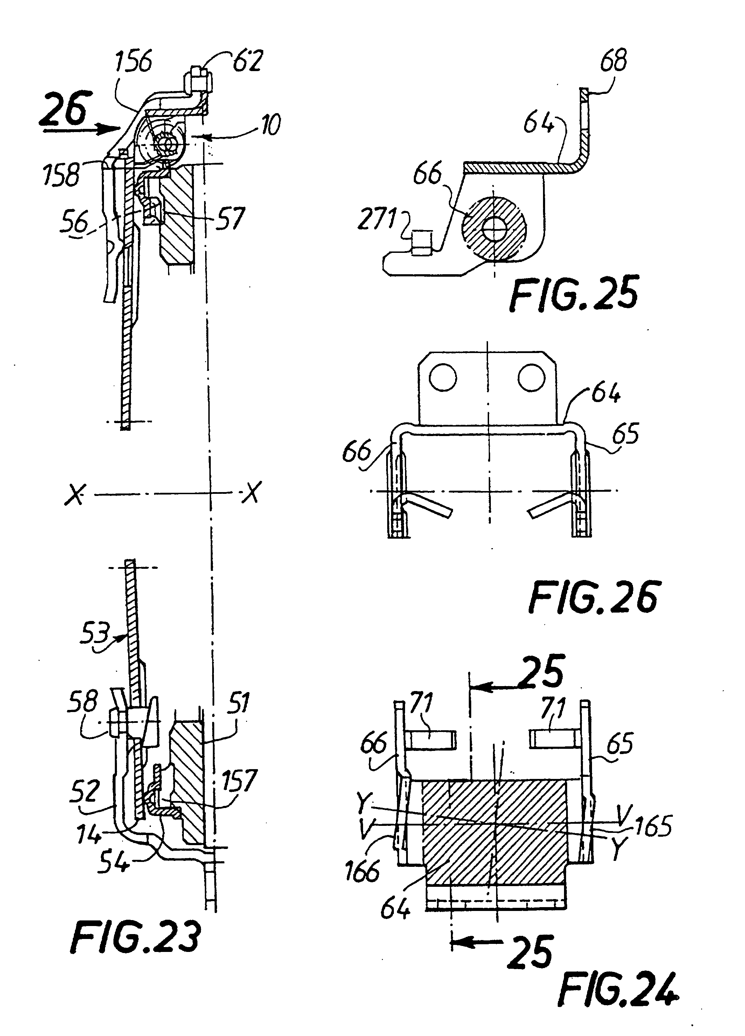

Bien entendu l'axe 67 peut être monobloc avec la roue 60 et la vis 63. Dans ce cas (figure 22) il faut ouvrir les trous de passage réalisés dans les ailes 65,66.

Ainsi le trou 461 peut initialement être un trou borgne (figure 22) avec un fond semi-circulaire. Ce trou 461 a une forme en U et est délimité par deux languettes 462 que l'on rabat ensuite pour emprisonner le palier 3.

Le palier 3 est donc fixé par sertissage grâce aux languettes 462, sur son aile associée. Ce type de réalisation s'applique également au cas où l'axe n'est pas incliné. Cela favorise un montage automatique de l'ensemble des pièces 3,60,63,67,86 sur les ailes. Ce montage est simple et rapide.

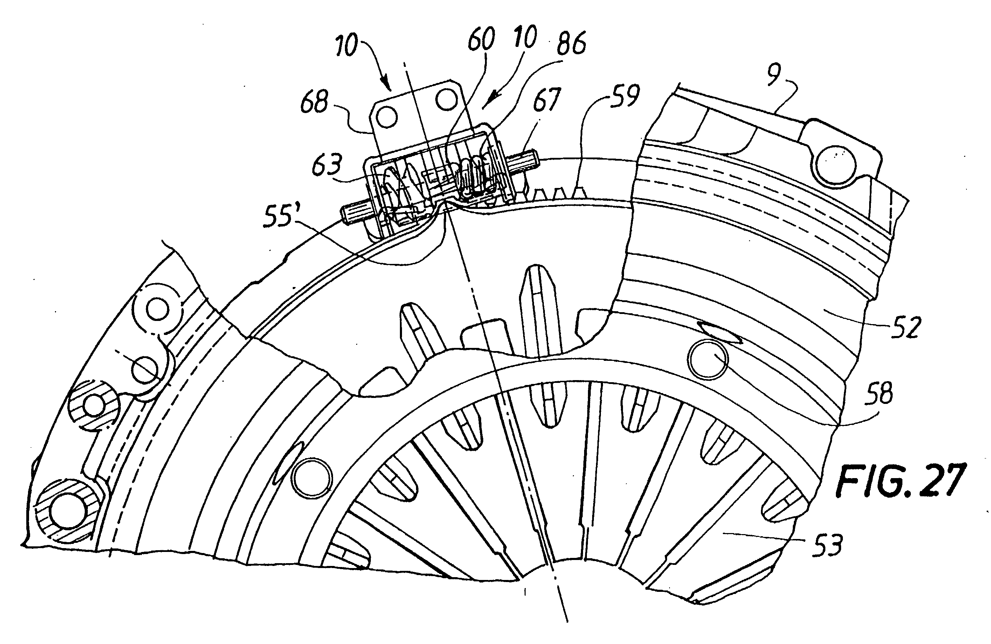

Bien entendu, figures 23 à 27, en variante, les ailes 66,65 peuvent porter les retours 71 et venir en contact avec le bord 158 de l'ouverture 156 alors plus haute radialement, le diaphragme 53 étant monté à articulation sur un embouti du couvercle et sur les têtes des colonnettes profilées en conséquence. Les retours 71 sont dirigés l'un vers l'autre et sont inclinés par rapport aux ailes 66,65.

La solution est peu encombrante.

On peut souder les ailes sur le bord 158 formant portée pour les ailes 66,65.

D'une manière générale on réduit encore le nombre de pattes de fixation au couvercle.

Bien entendu on peut inverser les structures, l'axe 67 ou la vis 63 présente des saillies pour être entraîné par un outil comportant des fentes de réception des saillies.

Les moyens de fixation 152 du couvercle 52 sur le plateau de réaction peuvent être constitués par la jupe du couvercle 52 fixée directement sur le plateau de réaction, par exemple par sertissage.

D'une manière générale il est possible de former un module comportant le plateau de réaction, le disque de friction dont les garnitures de friction sont intercalées axialement entre le plateau de réaction et le plateau de pression du mécanisme d'embrayage à friction dont le couvercle est alors fixé par ses moyens de fixation 152 de manière détachable ou non détachable sur le plateau de réaction.

C'est pour cette raison que l'on voit à la figure 1 des trous dans les doigts du diaphragme. Ces trous permettent le passage d'au moins un outil de vissage pour coopérer avec les têtes des vis de fixation du plateau de réaction, éventuellement en deux parties, au vilebrequin du moteur du véhicule automobile.

Le plateau de réaction peut alors appartenir à un double volant amortisseur comportant une première masse fixée sur le vilebrequin et portant un palier, tel qu'un roulement à billes, portant le plateau de réaction troué pour passage du ou des outils de vissage comme décrit dans le document FR-A-2 716 511 à ressorts radiaux accouplant la première masse au plateau de réaction.

Bien entendu les moyens embrayeurs à action axiale peuvent avoir une autre forme et comporter deux rondelles Belleville montées en série avec des moyens débrayeurs en forme de leviers comme décrits dans le document FR 96 11058 déposé le 5 septembre 1997. La vis 63 et la roue 60 peuvent être en deux pièces solidaires en rotation l'une de l'autre.

L'axe 67 est engagé à l'intérieur d'un trou central de la vis 63 ou monobloc avec la vis 63. D'une manière générale l'axe 67 prolonge la vis 63. Les zones d'appui 14 peuvent être reliées les unes aux autres.

Dans tous les cas il est prévu des moyens d'appui 14 qui, en variante, peuvent être distincts des rampes 56 en étant reliés à celles-ci comme décrit dans le document FR-A-2 684 151.

La présence des bras 74 de l'organe élastique 72 n'est pas indispensable, l'organe élastique pouvant être fixé par exemple par des points de soudure à l'âme 64.

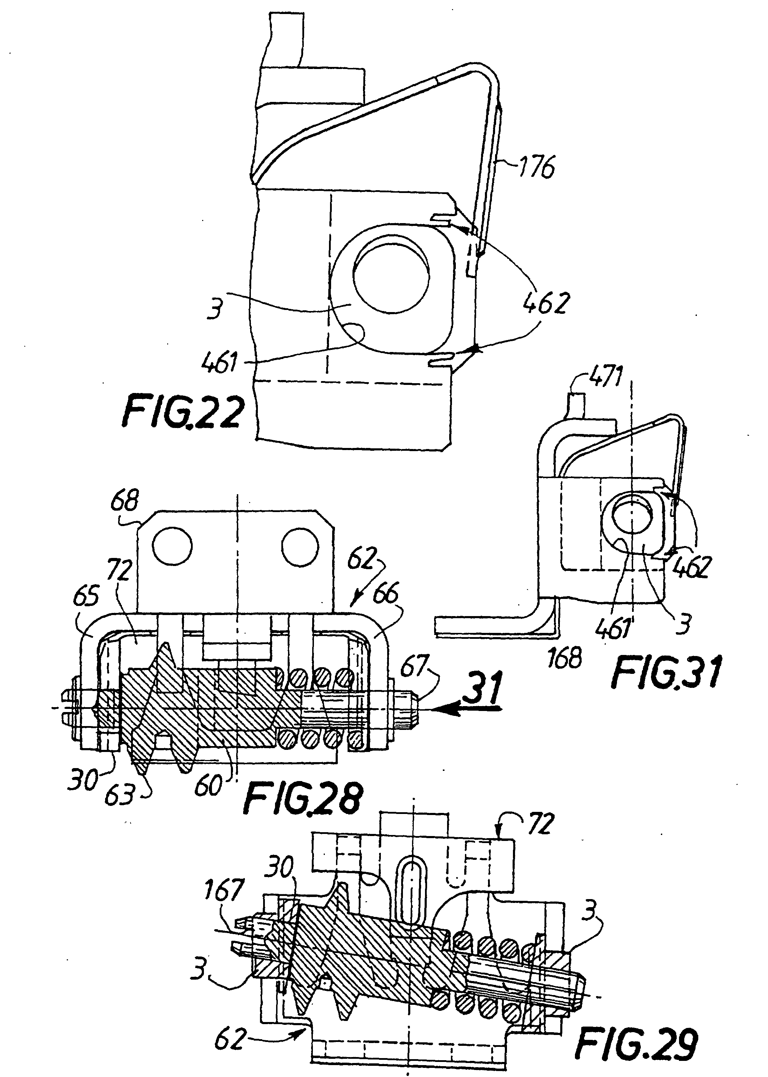

Ainsi dans les figures 28 à 30 l'organe élastique 72 porte directement sur les paliers 3 plus précisément sur la partie de plus grande taille 30 du palier 3, dont la face dorsale est inclinée comme visible à la figure 29.

L'organe 72 porte sur le sommet des parties 30 et ce élastiquement.

La partie 30 est donc de largeur variable, comme dans les figures 20 et 21, dans lesquelles la partie de plus grande taille n'est pas référencée.

L'ensemble vis 63 - roue à rochet 60 - axe 67 est monobloc et est monté avec le ressort 86 et les deux paliers entre les ailes 65,66 non vrillées.

Les deux parties 30 des paliers sont en contact avec les faces internes respectivement des ailes 66,65.

On enfile les parties de diamètre réduit 31 du palier 3, en matière plastique moulable ou en matériau fritté, dans les trous borgnes 461 du type de ceux de la figure 22 puis on rabat les languettes 462 pour verrouiller axialement par sertissage les paliers 3.

On notera que l'extrémité libre 471 de la patte de fixation et de stabilisation est décalée radialement vers l'axe par rapport à l'âme 64.

Ainsi l'ouverture 356 est plus haute que celle de la figure 7 ce qui permet de réaliser celle-ci facilement à la presse, la matière de l'ouverture s'évacuant facilement.

Il en est de même à la figure 23.

L'extrémité axiale 471 porte donc sur le bord de portée 158 de l'ouverture 356 et est fixé à celui-ci.

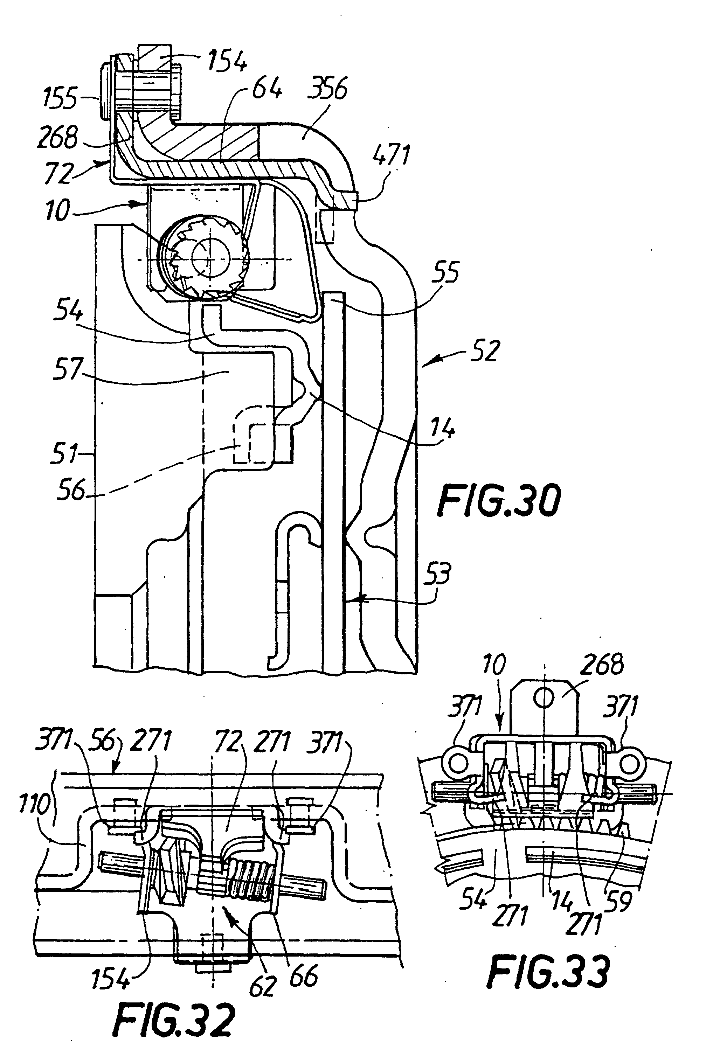

Bien entendu, figures 32 et 33, des pattes arrières de fixation 371 peuvent être issues des ailes 65,66 comme dans le document FR 96 11297. Les pattes 371 s'étendent perpendiculairement aux ailes 66,65 à l'extérieur du support 62. La patte avant de fixation 268 est moins large que la patte avant de fixation des figures précédentes et ne présente qu'un seul trou.

La fixation au couvercle 52 est réalisée à l'aide de trois pattes de fixation 271,268 et de trois rivets.

Les retours 271 sont identiques à ceux des figures 23 à 27, ces retours issus par pliage des ailes 66,65 sont inclinés.

Les ailes 66,65 sont vrillées sur une plus grande longueur, l'aile 65 étant vrillée vers l'extérieur.

Dans tous les cas les retours 71,271 sont des butées de contrôle ménageant l'organe élastique 72.

Dans tous les cas les faces de contact (les extrémités libres) du cliquet vrillé 78 et de la languette 76 travaillent de manière parallèle avec les dents de la roue 60.

Il en est de même de la vis 63 et de la denture 59.

Le plateau de pression présente également avantageusement un dégagement sur sa face dorsale pour éviter toute interférence avec la cassette.

Grâce à l'invention en cas d'usure on obtient un fonctionnement précis en trois phases au moins.

Dans une première phase, lors du réembrayage de l'embrayage, la languette fait tourner la roue 60 et le cliquet saute une dent. Lors de l'opération de débrayage suivant cette première phase, il ne se passe rien. Une deuxième phase de réembrayage débute au cours de laquelle la languette 76 fait tourner la roue 60 qui alors se déplace axialement car la denture 59 ne peut pas tourner à cause de la charge exercée par le diaphragme.

Le ressort 86 est comprimé. Lors de l'opération de débrayage suivant débute une troisième phase où le ressort peut se détendre et faire tourner la denture s'il n'y a pas trop de frottement à vaincre. Sinon il faut recommencer l'opération.

Dans les figures précédentes le support 62 est distinct du couvercle 52.

En variante, le support peut être monobloc avec le couvercle 52. Pour ce faire, on peut utiliser directement le logement 110 car celui-ci à une section globalement en forme de U avec âme centrale d'orientation axiale, formant la paroi sommitale du logement 110, et deux ailes latérales 111.

Il suffit donc de réaliser des trous décalés axialement dans les ailes pour selon l'invention incliner la vis sans fin et l'axe.

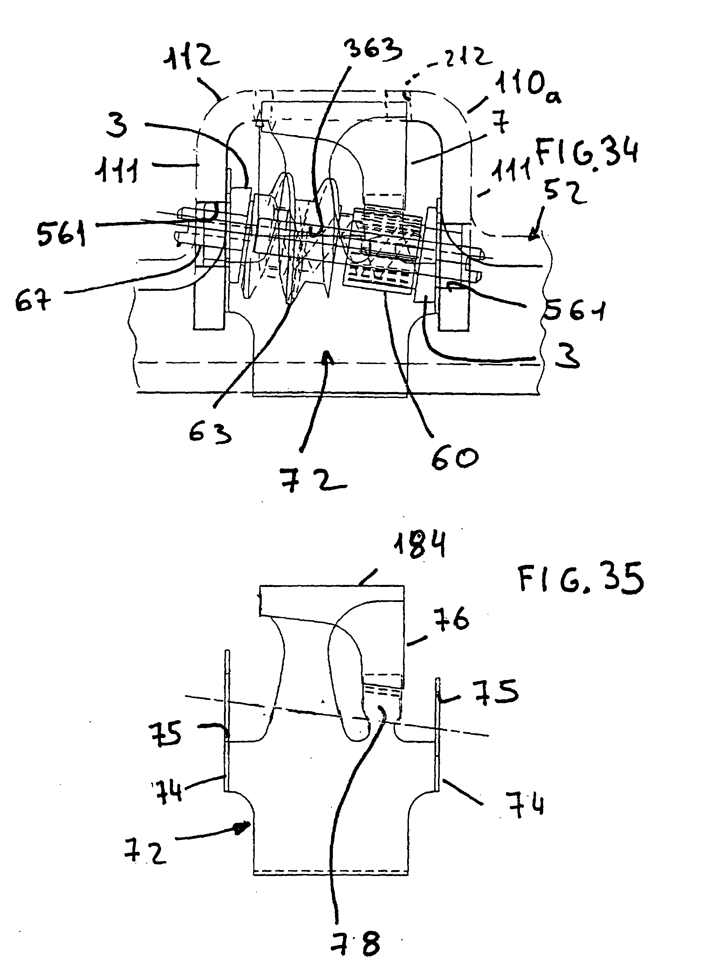

Bien entendu, le ressort de rattrapage 86 peut ne pas appartenir à la cassette 10. Ce ressort peut intervenir entre les rampes et les contre-rampes du dispositif de rattrapage d'usure. Ainsi, dans les figures 34 et 35, le support est réalisé à la faveur du logement 110a du couvercle 52 formé en surépaisseur dans le couvercle 52 comme le logement 110 des figures précédentes. Le logement 110a a donc en section globalement une forme de U avec une âme 112 d'orientation axiale formant la paroi sommitale du logement 110a affectant la jupe du couvercle 52 et deux ailes latérales 111 dans chacune desquelles est formé un trou borgne 561 pour montage d'un palier 3 identique à celui des figures 28 à 31, en sorte que le palier 3 est fixé de manière aisée par sertissage, collage ou soudage sur les ailes 111.

Il est formé d'une cassette 10 comprenant l'organe élastique 72 entre les ailes 74 duquel sont interposés les paliers 3 et un équipage roue à rochet 60 - vis sans fin intercalé entre les deux paliers. La cassette est enfilée par ses paliers 3 dans les trous borgnes 561 et ensuite immobilisé par verrouillage de ses paliers 3 sur les ailes 111. La cassette 10 présente un axe 67 traversant comme les figures précédentes les paliers 3, sachant qu'en final les ailes 74 et l'organe 72 sont emprisonnées entre les ailes 111 du logement et les paliers 3 à alésage central incliné. Le logement 110a est moins large compte tenu de l'absence du ressort de rattrapage dans la cassette. Il en résulte que le cliquet 78 et la languette de commande 76 s'étendent d'un côté du retour 184 pour pouvoir coopérer avec la roue à rochet 60 traversée centralement par un premier axe, dont une première extrémité est engagé dans un trou borgne 363 de la vis sans fin 63 et dont la deuxième extrémité traverse l'aile 74, le palier 3 et le trou 561 concerné. Ce premier axe est emmanché à force dans le trou 363 et la roue 60 pour sa solidarisation à la vis sans fin 63 et à la roue à rochet60.

En variante, l'axe est fixé par collage ou tout autre moyen à la vis 63 et à la roue 60. La vis 63 est prolongée, ici d'un seul tenant, par un second axe traversant l'autre aile 74, l'autre palier 3 et l'autre trou 561 en sorte que l'axe 67 est en deux parties, ce qui permet de former la cassette 10 précitée. Les butées de contrôle sont réalisées à la faveur d'une échancrure 212 de l'âme 112 de préférence en forme de T pour ménagement de deux épaulement extrêmes constituant les butées de contrôle. L'axe 67 présente des fentes à ses extrémités pour la remise à zéro de manière précitée.

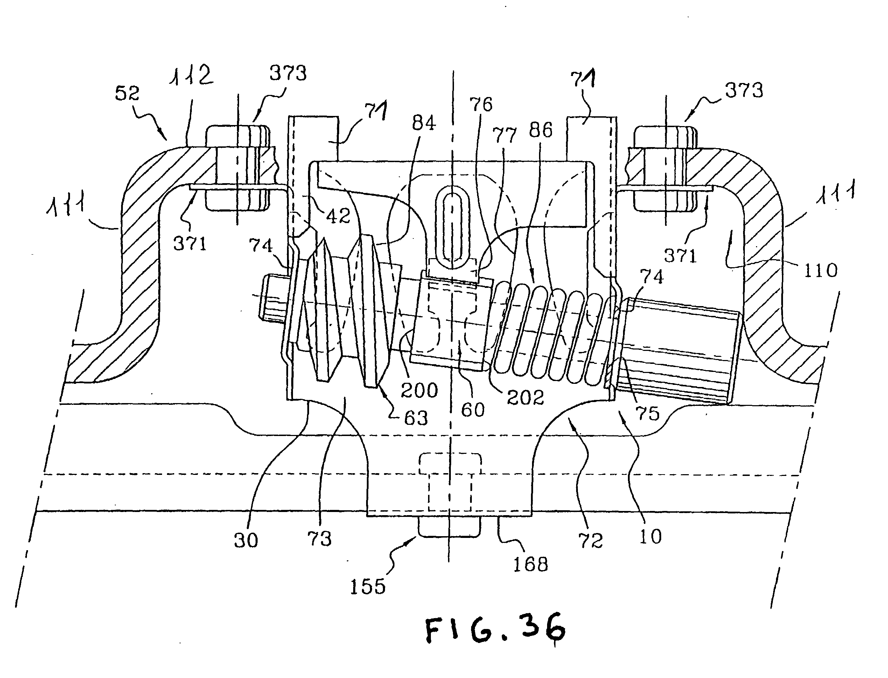

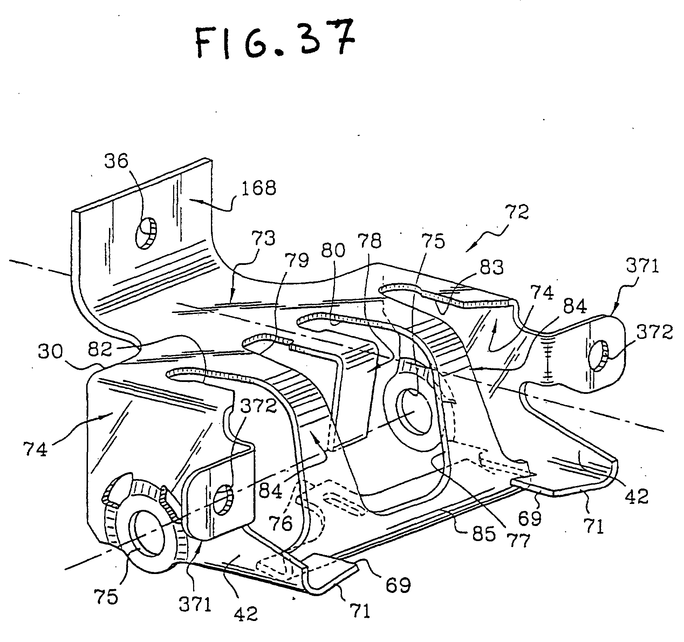

L'organe élastique 72,ayant globalement une forme de U avec une âme centrale 73 et deux ailes 74, peut constituer à lui seul le support de la cassette ainsi simplifiée comme montré dans les figures 36 et 37.

Cette cassette comporte donc un nombre réduit de composants, est plus légère et est donc plus facile à équilibrer. Dans ces figures, les mêmes signes de références sont utilisés pour les éléments communs aux autres figures. L'organe élastique 72 est une pièce de tôle découpée et pliée comme dans les autres figures. L'âme 73 est prolongée vers l'arrière puis obliquement radialement vars l'intérieur par une extension en oblique 84 délimitée par des échancrures 82, 83 en sorte que l'extension est élastique et est découpée centralement par une découpe 77, qui partage l'extension en deux bras. L'extrémité libre de l'extension forme un retour 85 en forme de barre d'orientation tangentielle prolongée par la languette de commande 76.

Le cliquet 78 est réalisé à la faveur de la découpe 77 et d'échancrures 79, 80 formées dans l'âme 73. Il en résulte que, le cliquet 76 et la languette 78 sont inclinées par rapport au plan de l'âme 73 et que le cliquet 70 est décalé par rapport à la languette 78. La roue à rochet 60 présente une face latérale 200 adjacente à la vis sans fin 63 et une face latérale 202 sur laquelle agit le ressort hélicoïdal de rattrapage en contact avec l'aile 74 vrillée au niveau du trou de passage 75 de l'axe. L'autre aile 74 est également vrillée au niveau de l'autre trou 75 de passage de l'autre extrémité de l'axe 67.

Les trous 75 sont décalés axialement pour inclinaison de l'axe 67 immobilisé axialement à l'une de ses extrémités par coopération d'une portion de plus grand diamètre avec l'aile 111 concernée du logement 110 et à l'autre de ses extrémités par un circlips. L'axe traverse l'ensemble monobloc vis 63 - roue 60 et est fixée à cet ensemble, par emmanchement à force ou collage etc...

Deux pattes latérales arrière de fixation 371 s'étendent transversalement vers l'extérieur à partir du bord verticale arrière des ailes 74. Chaque patte comporte un trou 372 pour le passage du rivet 373 de fixation à l'âme centrale 112 du logement 110. Une patte de fixation 168 s'étend à l'équerre à partir du bord avant 30 de l'âme 73 et est destinée à être fixée par un rivet 155, traversant un trou 36 de la patte 166, sur une plage du rebord 152 du couvercle. Les ailes 74 se prolongent au delà des bords arrières par un bras horizontal 42 prolongé lui-même par un retour 71 dirigé transversalement vers l'intérieur et constituant une buté e de contrôle pour la languette, les extrémités 69 des retours 71 étant dirigés l'une vers l'autre.

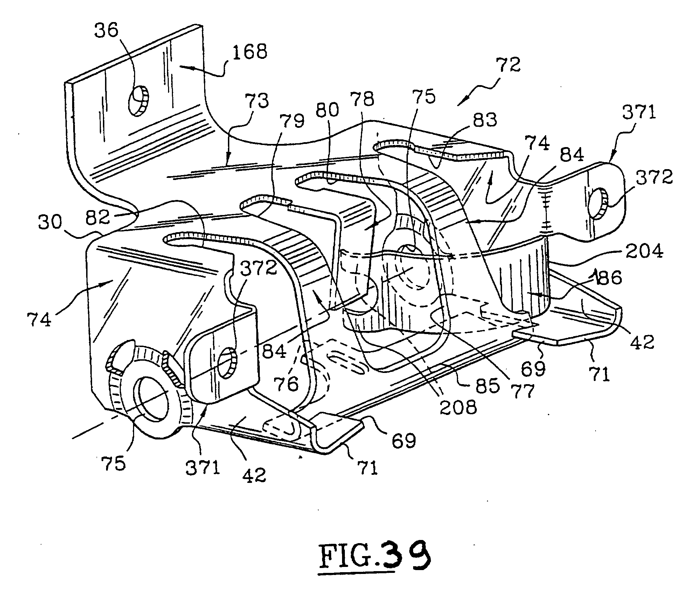

En variante (figure 39), le moyen élastique de rattrapage est constitué par une lame élastique 183 réalisée de matière avec l'organe 72. La lame 186 comporte une partie d'enracinement 204 qui la relie au bord arrière d'une aile 74. Cette lame 186 s'étend de manière inclinée vers l'intérieur de la cassette et présente une extrémité libre incurvée 208 avec deux branches espacées pour passage de l'axe de l'équipage 60, 63. L'extrémité 208 coopère avec la face latérale concernée de la roue à rochet.

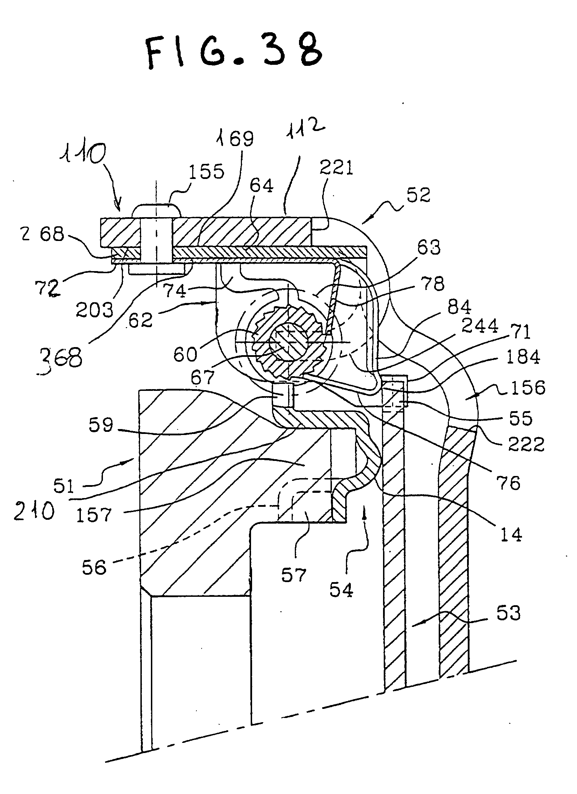

Bien entendu, figure 38, le support peut être fixé horizontalement sur l'âme 112 du logement 110, la face supérieure 169 de l'âme 64 étant en contact avec la face inférieure 203 de l'âme 112. Les rivets 155 servent à la fixation de pattes 268, 368 des pièces 62, 72 sur l'âme 112.

La fenêtre 156 est délimitée par des bords supérieur 221 et inférieur 222, tandis que l'appendice 55 agit sur une partie arrondie du retour 84. Le rebord de centrage 210 de l'anneau 54 sur la surépaisseur porte la référence 210.

On notera à la figure 2 que le fond du couvercle est prolongé radialement vers l'intérieur pour former à sa périphérie interne une butée 301 décalée axialement par rapport à l'appui primaire du couvercle et ce, en direction opposée au plateau de pression pour permettre l'appui du diaphragme avant montage du mécanisme d'embrayage sur le plateau de réaction du volant moteur pour protéger la cassette 10 et éviter que celle-ci ne se détériore.

## Revendications

1. Mécanisme d'embrayage à friction, notamment pour véhicule automobile, comportant un couvercle (52), un plateau de pression (51) lié en rotation au couvercle (52) tout en pouvant se déplacer axialement par rapport à celui-ci, des moyens d'appui (14) portés par le plateau de pression (51), des moyens embrayeurs (53) à action axiale agissant entre le couvercle (52) et les moyens d'appui (14), un dispositif de rattrapage d'usure comprenant, d'une part, des moyens à rampes (54) portant une denture externe (59) et placés entre le plateau de pression (51) et les moyens d'appui (14) portant les moyens à rampes (54) et, d'autre part, une cassette (10) portée par le couvercle (52) et comprenant une vis sans fin (63) coopérant avec la denture (59) des moyens à rampes (54), dans lequel la cassette (10) comporte un support (62) globalement en forme de U avec une âme (64) et deux ailes latérales (65,66) dotées chacune d'un trou (61,161,261,361,461) pour montage à rotation d'un équipage comprenant la vis sans fin (63) sur laquelle est monté un axe (67) traversant au moins un trou (61,161,261,361,461) de l'une des ailes latérales, les trous (61,161,261,361,461) étant décalés axialement l'un par rapport à l'autre pour inclinaison de la vis sans fin (63) et de l'axe (67), de manière à ce que le filet de la vis sans fin (63) soit globalement parallèle au flan des dents de la denture (59).

2. Mécanisme selon la revendication 1, dans lequel l'axe (67) et la vis (63) sont inclinés d'un angle égal à celui du filet de la vis sans fin (63).

3. Mécanisme selon la revendication 1 ou 2, dans lequel les ailes (66,65) sont vrillées.

4. Mécanisme selon la revendication 3, dans lequel les extrémités libres des ailes (65 et 66) sont inclinées en sorte que les ailes présentent des zones inclinées (165,66) parallèles entre elles et perpendiculaires à l'axe (67), lesdites zones inclinées étant dotées des trous (61,161...).

5. Mécanisme selon la revendication 4, dans lequel l'axe (67) présente une extrémité de diamètre réduit (267) traversant un trou (161) de la zone inclinée (166) de l'une des ailes (66) et en ce que la vis sans fin (63) présente un prolongement cylindrique (163) traversant le trou (265) traversant la zone inclinée (165) de l'autre aile (65).

6. Mécanisme selon la revendication 1 ou 2, dans lequel des paliers (3) troués centralement sont montés dans les trous (361) des ailes (65,66) et en ce que les trous centraux des paliers sont inclinés pour inclinaison de la vis sans fin (63) et de l'axe (67).

7. Mécanisme selon la revendication 6, dans lequel les paliers (3) sont épaulés et ont des faces dorsales inclinées.

8. Mécanisme selon l'une quelconque des revendications 3 à 7, dans lequel l'un des éléments axe (67) - vis sans fin (63) est conformé pour être entraîné en rotation par un outil de remise à zéro.

9. Mécanisme selon l'une quelconque des revendications 1 à 8, dans lequel le support (62) porte un organe élastique (72) doté d'une languette de commande (76) portée par un retour (85) que présente ledit organe élastique et d'un cliquet anti-retour (78), en ce que le cliquet anti-retour (78) et la languette de commande (76) sont propres à coopérer avec une roue à rochet (60) solidaire de la vis sans fin (63) et en ce que le retour (85) de l'organe élastique présente deux tronçons de hauteur différente disposés de part et d'autre de la languette de commande (76).

10. Mécanisme selon la revendication 9, dans lequel
un premier des tronçons est disposé en regard de la vis sans fin (63) et a une hauteur plus faible que le second tronçon disposé en regard d'un ressort hélicoïdal de compression, la vis sans fin (63) et le ressort hélicoïdal étant disposés de part et d'autre de la roue à rochet (60) en étant intercalés entre les deux ailes (65,66).

11. Mécanisme selon la revendication 9 ou 10, dans lequel les dents de la roue à rochet (60) sont inclinées en fonction de la vis sans fin (63) et en ce que le cliquet anti-retour (78) est vrillé pour coopérer de manière droite avec les dents inclinées de la roue à rochet (60).

12. Mécanisme selon la revendication 10 ou 11, dans lequel le retour (85) de l'organe élastique se raccorde à une zone arrondie (184) en contact avec un appendice (55) des moyens embrayeurs à action axiale (51) de l'embrayage.

13. Mécanisme selon l'une quelconque des revendications 1 à 12, dans lequel la languette de commande (76) présente centralement un bossage (176).

14. Mécanisme selon l'une quelconque des revendications 1 à 13, dans lequel l'âme (64) du support (62) est prolongée axialement pour présenter une patte (171) pénétrant dans une ouverture (158) du couvercle (52).

15. Mécanisme selon la revendication 14, dans lequel ladite patte (171) est fixée sur un des bords (158) de l'ouverture (56), par exemple par soudage, collage ou sertissage.

16. Mécanisme selon la revendication 14 ou 15, dans lequel deux retours (71) sont disposés de part et d'autre de la patte (171) pour limiter le déplacement d'un organe élastique (72) porté par le support (62).

17. Mécanisme selon l'une quelconque des revendications 1 à 12, dans lequel les ailes latérales (65,66) sont engagées dans une ouverture (156) pratiquée dans le couvercle (52).

18. Mécanisme selon la revendication 17, dans lequel les ailes latérales (65,66) sont fixées à l'un des bords (158) de l'ouverture (156).

19. Mécanisme selon la revendication 6 ou 7, dans lequel les paliers (3) sont engagés dans des trous borgnes (461) réalisés dans les ailes (66,65) et verrouillés par sertissage (462) dans lesdits trous.

## Patentansprüche

1. Reibungskupplungsmechanismus,insbesondere für Kraftfahrzeuge, umfassend einen Deckel (52), eine Druckplatte (51), die drehfest mit dem Deckel (52) verbunden ist, wobei sie sich im Verhältnis zu diesem axial verschieben kann, an der Druckplatte (51) angebrachte Auflagemittel (14), axial wirksame Einrückmittel (53), die zwischen dem Deckel (52) und den Auflagemitteln (14) wirken, und eine Verschleißnachstellvorrichtung, die einerseits Rampenmittel (54), die eine Außenzahnung (59) tragen und zwischen der Druckplatte (51) und den Auflagemitteln (14) angeordnet sind, die die Rampenmittel (54) tragen, und andererseits eine Kassette (10) umfaßt, die am Deckel (52) angebracht ist und die eine mit der Zahnung (59) der Rampenmittel (54) zusammenwirkende Schnecke (63) enthält, wobei die Kassette (10) einen insgesamt U-förmigen Träger (62) mit einem Steg (64) und zwei Seitenschenkeln (65, 66) umfaßt, die jeweils mit einem Loch (61, 161, 261, 361, 461) für die drehbare Lagerung einer Baugruppe versehen sind, die die Schnecke (63) umfaßt, an der eine Achse (67) angebracht ist, die durch wenigstens ein Loch (61, 161, 261, 361, 461) eines der Seitenschenkel hindurchgeht, wobei die Löcher (61, 161, 261, 361, 461) im Hinblick auf die Neigung der Schnecke (63) und der Achse (67) im Verhältnis zueinander axial versetzt sind, derart daß das Gewinde der Schnecke (63) insgesamt parallel zu der Flanke der Zähne der Zahnung (59) ist.

2. Mechanismus nach Anspruch 1, wobei die Achse (67) und die Schnecke (63) um einen Winkel gleich dem Winkel des Gewindes der Schnecke (63) geneigt sind.

3. Mechanismus nach Anspruch 1 oder 2, wobei die Schenkel (66, 65) verdreht sind.

4. Mechanismus nach Anspruch 3, wobei die freien Enden der Schenkel (65 und 66) geneigt sind, so daß die Schenkel geneigte Bereiche (165, 66) aufweisen, die parallel zueinander und senkrecht zur Achse (67) verlaufen, wobei die besagten geneigten Bereiche mit den Löchern (61, 161 ...) versehen sind.

5. Mechanismus nach Anspruch 4, wobei die Achse (67) ein Ende mit geringerem Durchmesser (267) aufweist, das durch ein Loch (161) des geneigten Bereichs (166) eines der Schenkel (66) hindurchgeht, und daß die Schnecke (63) eine zylindrische Verlängerung (163) aufweist, die durch das Loch (265) im geneigten Bereich (165) des anderen Schenkels (65) hindurchgeht.

6. Mechanismus nach Anspruch 1 oder 2, wobei mittig gelochte Lager (3) in den Löchern (361) der Schenkel (65, 66) eingesetzt sind und wobei die mittigen Löcher der Lager im Hinblick auf die Neigung der Schnecke (63) und der Achse (67) geneigt sind.

7. Mechanismus nach Anspruch 6, wobei die Lager (3) mit einer Schulter versehen sind und geneigte Rückseiten aufweisen.

8. Mechanismus nach einem der Ansprüche 3 bis 7, wobei eines der Elemente Achse (67) und Schnecke (63) so gestaltet ist, daß es durch ein Rückstellwerkzeug drehend mitgenommen werden kann.

9. Mechanismus nach einem der Ansprüche 1 bis 8, wobei der Träger (62) ein elastisches Organ (72) trägt, das mit einer Betätigungszunge (76), die an einem Rücksprung (85) angebracht ist, den das besagte elastische Organ aufweist, und mit einer Sperrklinke (78) versehen ist, wobei die Sperrklinke (78) und die Betätigungszunge (76) mit einem fest mit der Schnecke (63) verbundenen Sperrzahnrad (60) zusammenwirken können und wobei der Rücksprung (85) des elastischen Organs zwei Teilstücke mit unterschiedlicher Höhe aufweist, die beiderseits der Betätigungszunge (76) angeordnet sind.

10. Mechanismus nach Anspruch 9, wobei ein erstes der Teilstücke gegenüber der Schnecke (63) angeordnet ist und eine geringere Höhe als das gegenüber einer Schraubendruckfeder angeordnete zweite Teilstück aufweist, wobei die Schnecke (63) und die Schraubenfeder beiderseits des Sperrzahnrads (60) angeordnet und zwischen den beiden Schenkeln (65, 66) eingefügt sind.

11. Mechanismus nach Anspruch 9 oder 10, wobei die Zähne des Sperrzahnrads (60) in Abhängigkeit von der Schnecke (63) geneigt sind und daß die Sperrklinke (78) verdreht ist, um geradlinig mit den geneigten Zähnen des Sperrzahnrads (60) zusammenzuwirken.

12. Mechanismus nach Anspruch 10 oder 11, wobei sich der Rücksprung (85) des elastischen Organs an einen abgerundeten Bereich (184) in Kontakt mit einem Fortsatz (55) der axial wirksamen Einrückmittel (51) der Kupplung anschließt.

13. Mechanismus nach einem der Ansprüche 1 bis 12, wobei die Betätigungszunge (76) mittig einen Vorsprung (176) aufweist.

14. Mechanismus nach einem der Ansprüche 1 bis 13, wobei der Steg (64) des Trägers (62) axial verlängert ist, um einen Ansatz (171) aufzuweisen, der in eine Öffnung (158) des Deckels (52) eindringt.

15. Mechanismus nach Anspruch 14, wobei der besagte Ansatz (171), beispielsweise durch Schweißen, Verkleben oder Auffalzen, an einer der Kanten (158) der Öffnung (56) befestigt ist.

16. Mechanismus nach Anspruch 14 oder 15, wobei zwei Rücksprünge (71) beiderseits des Ansatzes (171) angeordnet sind, um die VerSchiebung eines am Träger (62) angebrachten elastischen Organs (72) zu begrenzen.

17. Mechanismus nach einem der Ansprüche 1 bis 12, wobei die Seitenschenkel (65, 66) in eine in den Deckel (52) eingearbeitete Öffnung (156) eingesetzt sind.

18. Mechanismus nach Anspruch 17, wobei die Seitenschenkel (65, 66) an einer der Kanten (158) der Öffnung (156) befestigt sind.

19. Mechanismus nach Anspruch 6 oder 7, wobei die Lager (3) in Sacklöcher (461), die in die Schenkel (66, 65) eingearbeitet sind, eingesetzt und durch Auffalzen (462) in den besagten Löchern arretiert sind.

## Claims

1. A friction clutch mechanism, in particular for a motor vehicle, comprising a cover plate (52), a pressure plate (51), which is coupled to the cover plate (52) for rotation with it while being axially displaceable with respect thereto, abutment means (14) carried by the pressure plate (51), axially acting declutching means (53) which work between the cover plate (52) and the abutment means (14), a wear compensating device comprising, firstly, ramp means (54) carrying a set of external teeth (59) and located between the pressure plate (51) and abutment means (14), which carry the ramp means (54), and secondly, a cassette (10) carried by the cover plate (52) and including a worm (63) in cooperation with the teeth (59) of the ramp means (54), wherein the cassette (10) comprises a generally U-shaped support member (62) having a spine portion (64) and two lateral wing portions (65, 66), each of which has a hole (61, 161, 261, 361, 461) for mounting, rotatably therein, a unit including the worm (63), on which there is mounted a spindle (67) extending through at least one hole (61, 161, 261, 361, 461) in one of the lateral wing portions, the holes (61, 261, 261, 361, 461) being axially offset with respect to each other for inclination of the worm (63) and spindle (67), whereby the thread of the worm (63) is generally parallel to the flanks of the teeth in the set of teeth (59).

2. A mechanism according to Claim 1, wherein the spindle (67) and worm (63) are inclined at an angle equal to that of the thread of the worm (63).

3. A mechanism according to Claim 1 or Claim 2, wherein the wing portions (64, 65) are drilled.

4. A mechanism according to Claim 3, wherein the free ends of the wing portions (65 and 66) are inclined in such a way that the wing portions have inclined zones (165, 66) parallel to each other and at right angles to the spindle (67), the said inclined zones being formed with holes (61,161...)

5. A mechanism according to Claim 4, wherein the spindle (67) has an end portion (267) of reduced diameter extending through a hole (161) in the inclined zone (166) of one of the wing portions (66), and wherein the worm (63) has a cylindrical extension (163) extending through the hole (265) formed in the inclined zone (165) of the other wing portion (65).

6. A mechanism according to Claim 1 or Claim 2, wherein bearings (3) with central holes are mounted in the holes (361) in the wing portions (65, 66), and wherein the central holes in the bearings are inclined so that the worm (63) and spindle (67) are inclined.

7. A mechanism according to Claim 6, wherein the bearings (3) are shouldered and have inclined dorsal faces.

8. A mechanism according to any one of Claims 3 to 7, wherein one of the elements consisting of the spindle (67) and the worm (63) is so configured as to be rotatable by means of a zeroing tool.

9. A mechanism according to any one of Claims 1 to 8, wherein the support member (62) carries a resilient member (72) which includes a control tongue (76), carried by a flange (85) of the said resilient member, and a non-return pawl (78), wherein the non-return pawl (78) and the control tongue (76) are adapted to cooperate with a ratchet wheel (60) which is fixed with respect to the worm (63), and wherein the flange (85) of the resilient member comprises two portions of different heights which are disposed on either side of the control tongue (76).

10. A mechanism according to Claim 9, wherein a first said portion is disposed facing the worm (63), and its height is smaller than that of the second portion, which is disposed facing a helical compression spring, the worm (63) and the helical spring being disposed on either side of the ratchet wheel (60), being interposed between the two wing portions (65, 66).

11. A mechanism according to Claim 9 or Claim 10, wherein the teeth of the ratchet wheel (60) are inclined as a function of the worm (63), and wherein the non-return pawl (78) is configured for cooperation at right angles with the inclined teeth of the ratchet wheel (60).

12. A mechanism according to Claim 10 or Claim 11, wherein the flange (85)) of the resilient member is joined to a rounded zone (184) which is in contact with a projecting element (55) of axially acting clutch engaging means (51) of the clutch.

13. A mechanism according to any one of Claims 1 to 12, wherein the control tongue (76) has a central boss (176).

14. A mechanism according to any one of Claim 1 to 13, wherein the spine portion (64) of the support member (62) is extended axially to define a lug (171) which penetrates into an aperture (158) in the cover plate (52).

15. A mechanism according to Claim 14, wherein the said lug (171) is fixed on one of the edges (158) of the aperture (56), for example by welding, adhesive bonding or seaming.

16. A mechanism according to Claim 14 or Claim 15, wherein two flanges (71) are disposed on either side of the lug (171), whereby to limit displacement of a resilient member (72) carried by the support member (62).

17. A mechanism according to any one of Claims 1 to 12, wherein the lateral wing portions (65, 66) are engaged in an aperture (156) formed in the cover plate (52).

18. A mechanism according to Claim 17, wherein the lateral wing portions (65, 66) are fixed to one of the edges (158) of the aperture (156).

19. A mechanism according to Claim 6 or Claim 7, wherein the bearings (3) are engaged in blind holes (461) formed in the wing portions (66, 65) and locked (462) in the said holes by seaming.
